# EUROPEAN PATENT APPLICATION

(11) **EP 4 322 692 A1**
(43) Date of publication of application: **14.02.2024**
(21) Application number: 22794830.4
(22) Date of filing: 25.04.2022
(51) Int. Cl.: H04W 76/11, H04W 76/10, H04W 76/15

(54) **COMMUNICATION METHOD AND APPARATUS**

(30) Priority: 25.04.2021 CN 202110452052
(71) Applicant: Huawei Technologies Co., Ltd., Shenzhen, Guangdong 518129 (CN)
(72) Inventor: GAN, Ming, Shenzhen, Guangdong 518129 (CN); LU, Yuxin, Shenzhen, Guangdong 518129 (CN); LIU, Chenchen, Shenzhen, Guangdong 518129 (CN); GONG, Bo, Shenzhen, Guangdong 518129 (CN)
(74) Representative: Epping - Hermann - Fischer
(86) International application number: PCT/CN2022/088888
(87) International publication number: WO 2022/228360

(57) **Abstract**

This application discloses a communication method and apparatus. The method includes: transmitting, by a second station in a second multi-link device, a first frame to a first station in a first multi-link device, where the first frame is used to request to tear down a TWT agreement for a first link, and the first link is any link in one or more links for which a TWT agreement is set up between the first multi-link device and the second multi-link device; and transmitting, by the first station, a second frame to the second station in response to the first frame. The first station may be any station, and is not limited to a station requesting to set up the TWT agreement. According to solutions in this application, for a TWT agreement set up between multi-link devices, any station may request to tear down the TWT agreement for the first link, thereby improving flexibility of tearing down the TWT agreement for the link.

## Description

This application claims priority to Chinese Patent Application No. 202110452052.2, filed with the China National Intellectual Property Administration on April 25, 2021 and entitled "COMMUNICATION METHOD AND APPARATUS", which is incorporated herein by reference in its entirety.

### TECHNICAL FIELD

This application relates to the field of wireless communication technologies, and in particular, to a communication method and apparatus.

### BACKGROUND

A multi-link cooperation technology can aggregate a plurality of non-consecutive links to provide an extra-high bandwidth. A station in a multi-link device (multi-link device, MLD) may operate at one or more frequencies, for example, sub 1 GHz, 2.4 GHz, 5 GHz, and 6 GHz. A target wake time agreement (target wake time agreement, TWT agreement) may be set up for one or more links between MLDs. The one or more links for which the TWT agreement is set up may share a parameter in the TWT agreement, for example, a TWT.

In an existing protocol, stations at two ends of a link need to tear down a TWT agreement set up for one or more links, where a station that originally requests to set up a TWT agreement is located on the link. A manner of tearing down the TWT agreement is not flexible.

In view of this, in this application, flexibility of tearing down a TWT agreement of a link in a multi-link device needs to be improved.

### SUMMARY

This application provides a communication method and apparatus, to improve flexibility of tearing down a TWT agreement for a link for a multi-link device.

According to a first aspect, a communication method is provided and applied to a first station in a first multi-link device. The method includes: receiving a first frame from a second station in a second multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device; and transmitting a second frame to the second station in response to the first frame. In this aspect, the received first frame carries the identifier of the first link, and a TWT agreement for a link may be uniquely determined based on the link identifier of the first link and a TWT flow identifier. Any station in the first multi-link device and the second multi-link device may request to tear down the TWT agreement for the first link, thereby improving flexibility of tearing down the TWT agreement.

In a possible implementation, the method further includes: tearing down, based on the link identifier of the first link and a correspondence, the TWT agreement for the first link corresponding to the link identifier of the first link. In this implementation, the TWT agreement may be accurately identified based on the link identifier, and any station may tear down the TWT agreement, thereby improving flexibility of tearing down the TWT agreement.

According to a second aspect, a communication method is provided and applied to a second station in a second multi-link device. The method includes: transmitting a first frame to a first station in a first multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device; and receiving a second frame from the first station, where the second frame is a response to the first frame. In this aspect, the first frame carries the identifier of the first link, and a TWT agreement for a link may be uniquely determined based on the link identifier of the first link and a TWT flow identifier. Any station in the first multi-link device and the second multi-link device may request to tear down the TWT agreement for the first link, thereby improving flexibility of tearing down the TWT agreement.

With reference to any one of the first aspect, the second aspect, or the possible implementations of the first aspect, in another possible implementation, the set-up TWT agreement corresponds to one TWT flow identifier. In this implementation, one TWT flow identifier is used for one or more set-up TWT agreements. The TWT flow identifier needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and that are set up based on the link identifier, to ensure that a specified TWT agreement can be torn down based on a teardown frame.

With reference to any one of the first aspect, the second aspect, or the possible implementations of the first aspect or the second aspect, in still another possible implementation, a correspondence exists between the link identifier and the TWT flow identifier. In this implementation, because the correspondence exists between the link identifier and the TWT flow identifier, the TWT agreement can be accurately identified based on the link identifier and the TWT flow identifier.

With reference to any one of the first aspect, the second aspect, or the possible implementations of the first aspect or the second aspect, in yet another possible implementation, the correspondence further includes at least one of the following information: media access control MAC address information of a third station requesting to set up the TWT agreement, MAC address information of a fourth station responding to a setup request, MAC address information of the first multi-link device, and MAC address information of the second multi-link device. The third station belongs to the first multi-link device, and the fourth station belongs to the second multi-link device. Alternatively, the third station belongs to the second multi-link device, and the fourth station belongs to the first multi-link device. In this implementation, the TWT flow identifier needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and that are set up based on the link identifier, to ensure that a specified TWT agreement can be torn down based on a teardown frame. The TWT agreement can be accurately identified according to the correspondence.

With reference to any one of the first aspect, the second aspect, or the possible implementations of the first aspect or the second aspect, in still yet another possible implementation, the first frame includes a TWT flow field, and the link identifier is included in the TWT flow field. In this implementation, the TWT flow field may be extended to include the link identifier provided in this application.

According to a third aspect, a communication method is provided and applied to a third station. The method includes: receiving a third frame from a fourth station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier; transmitting a fourth frame to the fourth station in response to the third frame; transmitting a fifth frame to the fourth station, where the fifth frame is used to acknowledge that the one or more TWT agreements requested to be set up are accepted; and receiving a sixth frame from the fourth station, where the sixth frame is a response to the fifth frame. In this aspect, the received third frame for requesting to set up the TWT agreement indicates the information about the link for which the one or more TWT agreements are requested to be set up, so that the TWT agreement is associated with the link.

According to a fourth aspect, a communication method is provided and applied to a fourth station. The method includes: transmitting a third frame to a third station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier; receiving a fourth frame from the third station, where the fourth frame is a response to the third frame; receiving a fifth frame from the third station, where the fifth frame is used to acknowledge that the one or more TWT agreements requested to be set up are accepted; and transmitting a sixth frame to the third station in response to the fifth frame. In this aspect, the third frame for requesting to set up the TWT agreement indicates the information about the link for which the one or more TWT agreements are requested to be set up, so that the TWT agreement is associated with the link.

With reference to the third aspect or the fourth aspect, in a possible implementation, the first field is located in a control field in a TWT element. When the first field indicates that the second field exists in the third frame, the third frame further includes: The second field is located in a TWT parameter information field of the TWT element. In this implementation, the control field and the TWT parameter information field may be extended. The control field includes the first field, indicating whether the second field exists in the third frame. If the second field exists in the third frame, the second field is located in the extended TWT parameter information field.

With reference to any one of the third aspect, the fourth aspect, or the possible implementations of the third aspect or the fourth aspect, in another possible implementation, the second field is a bitmap. In this implementation, the information about the link for which the one or more TWT agreements are requested to be set up can be accurately indicated by using the bitmap with low overheads.

With reference to any one of the third aspect, the fourth aspect, or the possible implementations of the third aspect or the fourth aspect, in still another possible implementation, the second field includes a link identifier of the link for which the one or more TWT agreements are requested to be set up. In this implementation, the second field may carry the link identifier of the link for which the one or more TWT agreements are requested to be set up. After obtaining the second field by parsing, the receive device may clearly know the link identifier of the link for which the one or more TWT agreements are requested to be set up.

With reference to any one of the third aspect, the fourth aspect, or the possible implementations of the third aspect or the fourth aspect, in yet another possible implementation, a correspondence exists between the TWT flow identifier and the link for which the one or more TWT agreements are requested to be set up. In this implementation, the TWT flow identifier needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and that are set up based on the link identifier, to ensure that a specified TWT agreement can be torn down based on a teardown frame.

With reference to any one of the third aspect, the fourth aspect, or the possible implementations of the third aspect or the fourth aspect, in still yet another possible implementation, the correspondence further includes at least one of the following information: media access control MAC address information of the third station, MAC address information of the fourth station, MAC address information of the first multi-link device, and MAC address information of the second multi-link device. The third station belongs to the first multi-link device, and the fourth station belongs to the second multi-link device. Alternatively, the third station belongs to the second multi-link device, and the fourth station belongs to the first multi-link device. In this implementation, the TWT flow identifier needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and that are set up based on the link identifier, to ensure that a specified TWT agreement can be torn down based on a teardown frame. The TWT agreement can be accurately identified according to the correspondence.

According to a fifth aspect, a communication method is provided and applied to a first station in a first multi-link device. The method includes: receiving a first frame from a second station in a second multi-link device, where the first frame is used to request to tear down a target wake time agreement TWT agreement for a first link, the first frame includes a flow identifier of the TWT agreement, and the TWT agreement corresponds to the TWT flow identifier; and transmitting a second frame to the second station in response to the first frame. In this aspect, the received frame for requesting to tear down the TWT agreement for the first link carries the TWT flow identifier, and a TWT agreement for one link may be uniquely determined based on the TWT flow identifier. Any station in a third multi-link device and a fourth multi-link device may request to tear down the TWT agreement for the first link, thereby improving flexibility of tearing down the TWT agreement.

With reference to the fifth aspect, in a possible implementation, the method further includes: tearing down, based on the TWT flow identifier, the TWT agreement corresponding to the TWT flow identifier. In this implementation, a TWT agreement corresponds to one TWT flow identifier. The corresponding TWT agreement can be accurately torn down based on the TWT flow identifier. After obtaining the TWT flow identifier, any station may tear down the corresponding TWT agreement, thereby improving flexibility of tearing down the TWT agreement.

According to a sixth aspect, a communication method is provided and applied to a second station in a second multi-link device. The method includes: transmitting a first frame to a first station in a first multi-link device, where the first frame is used to request to tear down a target wake time agreement TWT agreement for a first link, the first frame includes a flow identifier of the TWT agreement, and the TWT agreement corresponds to the TWT flow identifier; and receiving a second frame from the first station, where the second frame is a response to the first frame. In this aspect, the frame for requesting to tear down the TWT agreement for the first link carries the TWT flow identifier, and a TWT agreement for one link may be uniquely determined based on the TWT flow identifier. Any station in a third multi-link device and a fourth multi-link device may request to tear down the TWT agreement for the first link, thereby improving flexibility of tearing down the TWT agreement.

With reference to any one of the fifth aspect, the sixth aspect, or the possible implementations of the fifth aspect, in another possible implementation, the TWT flow identifier is included in a first parameter set. The first parameter set further includes at least one of the following information: a link identifier of the first link, media access control MAC address information of a third station requesting to set up the TWT agreement, MAC address information of a fourth station responding to the request, MAC address information of the first multi-link device, MAC address information of the second multi-link device, MAC address information of the first station, and MAC address information of the second station. The third station belongs to the first multi-link device, and the fourth station belongs to the second multi-link device. Alternatively, the third station belongs to the second multi-link device, and the fourth station belongs to the first multi-link device. In this implementation, a TWT flow identifier in each TWT agreement needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and/or that are set up based on the link identifier, to ensure that a specified TWT agreement can be torn down based on a teardown frame. Alternatively, a TWT flow identifier in each TWT agreement needs to be unique in a plurality of TWT agreements set up between a station initiating TWT agreement teardown and a station responding to the TWT agreement teardown, to ensure that a specified TWT agreement can be torn down based on a teardown frame.

According to a seventh aspect, a communication method is provided and applied to a third station. The method includes: receiving a third frame from a fourth station, where the third frame is used to request to set up one or more target wake time agreements TWT agreements on one or more links, and each TWT agreement corresponds to one TWT flow identifier; transmitting a fourth frame to the fourth station in response to the third frame; transmitting a fifth frame to the fourth station, where the fifth frame is used to acknowledge that the one or more TWT agreements requested to be set up are accepted; and receiving a sixth frame from the fourth station, where the sixth frame is a response to the fifth frame. In this aspect, a TWT agreement for one link may be uniquely determined based on the TWT flow identifier, thereby improving accuracy of identifying the TWT agreement.

According to an eighth aspect, a communication method is provided and applied to a fourth station. The method includes: transmitting a third frame to a third station, where the third frame is used to request to set up one or more target wake time agreements TWT agreements on one or more links, and each TWT agreement corresponds to one TWT flow identifier; receiving a fourth frame from the third station, where the fourth frame is a response to the third frame; receiving a fifth frame from the third station, where the fifth frame is used to acknowledge that the one or more TWT agreements requested to be set up are accepted; and transmitting a sixth frame to the fourth station in response to the fifth frame. In this aspect, a TWT agreement for one link may be uniquely determined based on the TWT flow identifier, thereby improving accuracy of identifying the TWT agreement.

With reference to the seventh aspect or the eighth aspect, in a possible implementation, the third frame includes a first field. The first field indicates whether a second field exists in the third frame. The second field indicates information about a link for which the one or more TWT agreements are requested to be set up. In this implementation, the control field may be extended, and the control field includes the first field.

With reference to any one of the seventh aspect, the eighth aspect, or the possible implementations of the seventh aspect or the eighth aspect, in another possible implementation, the first field is located in a control field in a TWT element. When the first field indicates that the second field exists in the third frame, the third frame further includes: The second field is located in a TWT parameter information field of the TWT element. In this implementation, the TWT parameter information field may be extended. The control field includes the first field, indicating whether the second field exists in the third frame. If the second field exists in the third frame, the second field is located in the extended TWT parameter information field.

With reference to any one of the seventh aspect, the eighth aspect, or the possible implementations of the seventh aspect or the eighth aspect, in still another possible implementation, the second field is a bitmap. In this implementation, the information about the link for which the one or more TWT agreements are requested to be set up can be accurately indicated by using the bitmap with low overheads.

With reference to any one of the seventh aspect, the eighth aspect, or the possible implementations of the seventh aspect or the eighth aspect, in yet another possible implementation, the second field includes a link identifier of the link for which the one or more TWT agreements are requested to be set up. In this implementation, the second field may carry the link identifier of the link for which the one or more TWT agreements are requested to be set up. After obtaining the second field by parsing, the receive device may clearly know the link identifier of the link for which the one or more TWT agreements are requested to be set up.

With reference to any one of the seventh aspect, the eighth aspect, or the possible implementations of the seventh aspect or the eighth aspect, in still yet another possible implementation, the TWT flow identifier is included in a first parameter set. The first parameter set further includes at least one of the following information: a link identifier of the first link, media access control MAC address information of the third station requesting to set up the TWT agreement, MAC address information of the fourth station responding to the request, MAC address information of the first multi-link device, MAC address information of the second multi-link device, MAC address information of a first station, and MAC address information of a second station. The third station belongs to the first multi-link device, and the fourth station belongs to the second multi-link device. Alternatively, the third station belongs to the second multi-link device, and the fourth station belongs to the first multi-link device. In this implementation, a TWT flow identifier in each TWT agreement needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and/or that are set up based on the link identifier, to ensure that a specified TWT agreement can be torn down based on a teardown frame. Alternatively, a TWT flow identifier in each TWT agreement needs to be unique in a plurality of TWT agreements set up between a station initiating TWT agreement teardown and a station responding to the TWT agreement teardown, to ensure that a specified TWT agreement can be torn down based on a teardown frame.

According to a ninth aspect, a communication apparatus is provided, to implement the communication method according to the first aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a first frame from a second station in a second multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device. The transceiver unit is further configured to transmit a second frame to the second station in response to the first frame.

Further, the processing unit is configured to: tear down, based on the link identifier of the first link and a correspondence, the TWT agreement for the first link corresponding to the link identifier of the first link.

According to a tenth aspect, a communication apparatus is provided, to implement the communication method according to the second aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a first frame to a first station in a first multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device. The transceiver unit is further configured to receive a second frame from the first station, where the second frame is a response to the first frame.

According to an eleventh aspect, a communication apparatus is provided, to implement the communication method according to the third aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a third frame from a fourth station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier. The transceiver unit is further configured to transmit a fourth frame to the fourth station in response to the third frame. The transceiver unit is further configured to transmit a fifth frame to the fourth station, where the fifth frame is used to acknowledge that the one or more TWT agreements requested to be set up are accepted. The transceiver unit is further configured to receive a sixth frame from the fourth station, where the sixth frame is a response to the fifth frame.

According to a twelfth aspect, a communication apparatus is provided, to implement the communication method according to the fourth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a third frame to a third station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier. The transceiver unit is further configured to receive a fourth frame from the third station, where the fourth frame is a response to the third frame. The transceiver unit is further configured to receive a fifth frame from the third station, where the fifth frame is used to acknowledge that the one or more TWT agreements requested to be set up are accepted. The transceiver unit is further configured to transmit a sixth frame to the third station in response to the fifth frame.

According to a thirteenth aspect, a communication apparatus is provided, to implement the communication method according to the fifth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a first frame from a second station in a second multi-link device, where the first frame is used to request to tear down a target wake time agreement TWT agreement for a first link, the first frame includes a flow identifier of the TWT agreement, and the TWT agreement corresponds to the TWT flow identifier. The transceiver unit is further configured to transmit a second frame to the second station in response to the first frame. Further, the processing unit is configured to tear down, based on the TWT flow identifier, the TWT agreement corresponding to the TWT flow identifier.

According to a fourteenth aspect, a communication apparatus is provided, to implement the communication method according to the sixth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a first frame to a first station in a first multi-link device, where the first frame is used to request to tear down a target wake time agreement TWT agreement for a first link, the first frame includes a flow identifier of the TWT agreement, and the TWT agreement corresponds to the TWT flow identifier. The transceiver unit is further configured to receive a second frame from the first station, where the second frame is a response to the first frame.

According to a fifteenth aspect, a communication apparatus is provided, to implement the communication method according to the seventh aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a third frame from a fourth station, where the third frame is used to request to set up one or more target wake time agreements TWT agreements on one or more links, and each TWT agreement corresponds to one TWT flow identifier. The transceiver unit is further configured to transmit a fourth frame to the fourth station in response to the third frame. The transceiver unit is further configured to transmit a fifth frame to the fourth station, where the fifth frame is used to acknowledge that the one or more TWT agreements requested to be set up are accepted. The transceiver unit is further configured to receive a sixth frame from the fourth station, where the sixth frame is a response to the fifth frame.

According to a sixteenth aspect, a communication apparatus is provided, to implement the communication method according to the eighth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a third frame to a third station, where the third frame is used to request to set up one or more target wake time agreements TWT agreements on one or more links, and each TWT agreement corresponds to one TWT flow identifier. The transceiver unit is further configured to receive a fourth frame from the third station, where the fourth frame is a response to the third frame. The transceiver unit is further configured to receive a fifth frame from the third station, where the fifth frame is used to acknowledge that the one or more TWT agreements requested to be set up are accepted. The transceiver unit is further configured to transmit a sixth frame to the fourth station in response to the fifth frame.

In a possible implementation, the communication apparatus according to any one of the ninth aspect to the sixteenth aspect includes a processor coupled to a memory. The processor is configured to support the apparatus in performing a corresponding function in the foregoing communication method. The memory is configured to be coupled to the processor, and stores a program (instructions) necessary for the apparatus and/or data necessary for the apparatus. Optionally, the communication apparatus may further include a communication interface, configured to support communication between the apparatus and another network element. Optionally, the memory may be located inside the communication apparatus, or may be located outside the communication apparatus.

In another possible implementation, the communication apparatus according to any one of the ninth aspect to the sixteenth aspect includes a processor and a transceiver apparatus. The processor is coupled to the transceiver apparatus. The processor is configured to execute a computer program or instructions, to control the transceiver apparatus to receive and transmit information. When the processor executes the computer program or the instructions, the processor is further configured to perform the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is the chip, the transceiver apparatus is a transceiver circuit or an input/output interface. When the communication apparatus according to any one of the ninth aspect to the sixteenth aspect is the chip, a transmitting unit may be an output unit, for example, an output circuit or a communication interface, and a receiving unit may be an input unit, for example, an input circuit or a communication interface. When the communication apparatus is the terminal, a transmitting unit may be a transmitter or a transmitter machine, and a receiving unit may be a receiver or a receiver machine.

According to a seventeenth aspect, a communication system is provided, including the communication apparatus according to any one of the ninth aspect or the implementations of the ninth aspect and the communication apparatus according to any one of the tenth aspect or the implementations of the tenth aspect.

According to an eighteenth aspect, a communication system is provided, including the communication apparatus according to any one of the eleventh aspect or the implementations of the eleventh aspect and the communication apparatus according to any one of the twelfth aspect or the implementations of the twelfth aspect.

According to a nineteenth aspect, a communication system is provided, including the communication apparatus according to any one of the thirteenth aspect or the implementations of the thirteenth aspect and the communication apparatus according to any one of the fourteenth aspect or the implementations of the fourteenth aspect.

According to a twentieth aspect, a communication system is provided, including the communication apparatus according to any one of the fifteenth aspect or the implementations of the fifteenth aspect and the communication apparatus according to any one of the sixteenth aspect or the implementations of the sixteenth aspect.

According to a twenty-first aspect, a computer-readable storage medium is provided, and stores a computer program. When the computer program is run on a computer, the method according to any one of the first aspect to the eighth aspect and the implementations of the first aspect to the eighth aspect is performed.

According to a twenty-second aspect, a computer program product is provided. When the computer program product runs on a computer, the method according to any one of the first aspect to the eighth aspect and the implementations of the first aspect to the eighth aspect is performed.

According to a twenty-third aspect, a communication method is provided and applied to a first station in a first multi-link device. The method includes: receiving a first frame from a second station in a second multi-link device, where the first frame is used to request to tear down a target wake time agreement TWT agreement for a first link, and the first link is any link in one or more links for which a TWT agreement is set up between the first multi-link device and the second multi-link device; and transmitting a second frame to the second station in response to the first frame. In this aspect, for a TWT agreement set up between multi-link devices, any station may request to tear down the TWT agreement for the first link, thereby improving flexibility of tearing down the TWT agreement for the link.

According to a twenty-fourth aspect, a communication method is provided and applied to a second station in a second multi-link device. The method includes: transmitting a first frame to a first station in a first multi-link device, where the first frame is used to request to tear down a target wake time agreement TWT agreement for a first link, and the first link is any link in one or more links for which a TWT agreement is set up between the first multi-link device and the second multi-link device; and receiving a second frame from the first station, where the second frame is a response to the first frame. In this aspect, for a TWT agreement set up between multi-link devices, any station may request to tear down the TWT agreement for the first link, thereby improving flexibility of tearing down the TWT agreement for the link.

With reference to the twenty-third aspect or the twenty-fourth aspect, in a possible implementation, the first frame includes link identifier information of the first link. The link identifier information includes a link identifier or a link bitmap. In this implementation, the link identifier information is carried in the first frame, and the TWT agreement for the link may be successfully torn down based on the link identifier information, thereby improving flexibility of tearing down the TWT agreement for the link.

With reference to any one of the twenty-third aspect, the twenty-fourth aspect, or the possible implementations of the twenty-third aspect or the twenty-fourth aspect, in another possible implementation, a first correspondence exists between the TWT agreement for the first link and the link identifier information of the first link. In this implementation, the TWT agreement for the link may be successfully torn down based on the link identifier information, thereby improving flexibility of tearing down the TWT agreement for the link.

With reference to any one of the twenty-third aspect, the twenty-fourth aspect, or the possible implementations of the twenty-third aspect or the twenty-fourth aspect, in still another possible implementation, the first correspondence includes the following combination information: a TWT flow identifier of the TWT agreement, media access control MAC address information of a third station requesting to set up the TWT agreement, MAC address information of a fourth station responding to a setup request, and the link identifier of the first link; or a TWT flow identifier of the TWT agreement, MAC address information of the first multi-link device, MAC address information of the second multi-link device, and the link identifier of the first link. The TWT flow identifier identifies one or more TWT agreements set up between the first multi-link device and the second multi-link device. In this implementation, the TWT flow identifier needs to be unique in a plurality of TWT agreements that are set up between a station requesting to set up a TWT agreement and a station responding to a setup request, and that are set up based on the link identifier, to ensure that a specified TWT agreement can be torn down based on a teardown frame. Alternatively, a TWT flow identifier in each TWT agreement needs to be unique in a plurality of TWT agreements that are set up between an MLD requesting to set up a TWT agreement and an MLD responding to a setup request, and that are set up based on the link identifier, to ensure that a specified TWT agreement can be torn down based on a teardown frame. According to the correspondence, the TWT agreement can be identified.

With reference to any one of the twenty-third aspect, the twenty-fourth aspect, or the possible implementations of the twenty-third aspect or the twenty-fourth aspect, in yet another possible implementation, the first frame includes a TWT flow field. The link identifier information is carried in the TWT flow field.

With reference to any one of the twenty-third aspect, the twenty-fourth aspect, or the possible implementations of the twenty-third aspect or the twenty-fourth aspect, in still yet another possible implementation, the method further includes: tearing down, based on the first correspondence, the TWT agreement corresponding to the link identifier information of the first link. In this implementation, the TWT agreement for the link may be successfully torn down based on the link identifier information, thereby improving flexibility of tearing down the TWT agreement for the link.

With reference to any one of the twenty-third aspect, the twenty-fourth aspect, or the possible implementations of the twenty-third aspect or the twenty-fourth aspect, in a further possible implementation, a second correspondence exists between the TWT agreement for the first link and MAC address information of a multi-link device. The multi-link device includes the first multi-link device and/or the second multi-link device. In this implementation, the second correspondence exists between the TWT agreement for the first link and the MAC address information of the multi-link device, and the TWT agreement may be successfully torn down.

With reference to any one of the twenty-third aspect, the twenty-fourth aspect, or the possible implementations of the twenty-third aspect or the twenty-fourth aspect, in a still further possible implementation, the second correspondence includes the following combination information: a TWT flow identifier of the TWT agreement, media access control MAC address information of the first multi-link device, and MAC address information of the second multi-link device; or a TWT flow identifier of the TWT agreement, MAC address information of the second station, and MAC address information of the first station. The TWT flow identifier identifies a TWT agreement set up between the first multi-link device and the second multi-link device. In this implementation, a TWT flow identifier in each TWT agreement needs to be unique in a plurality of TWT agreements set up between a station requesting to set up a TWT agreement and a station responding to a setup request, to ensure that a specified TWT agreement can be torn down based on a teardown frame. Alternatively, a TWT flow identifier in each TWT agreement needs to be unique in a plurality of TWT agreements set up between an MLD requesting to set up a TWT agreement and an MLD responding to a setup request, to ensure that a specified TWT agreement can be torn down based on a teardown frame. Alternatively, a TWT flow identifier in each TWT agreement needs to be unique in a plurality of TWT agreements set up between a station initiating TWT agreement teardown and a station responding to the TWT agreement teardown, to ensure that a specified TWT agreement can be torn down based on a teardown frame.

With reference to any one of the twenty-third aspect, the twenty-fourth aspect, or the possible implementations of the twenty-third aspect or the twenty-fourth aspect, in a yet further possible implementation, the method further includes: tearing down, based on the second correspondence, the TWT agreement corresponding to the MAC address information of the multi-link device. In this implementation, the second correspondence exists between the TWT agreement for the first link and the MAC address information of the multi-link device, and the TWT agreement may be successfully torn down.

According to a twenty-fifth aspect, a communication method is provided and applied to a third station. The method includes: receiving a third frame from a fourth station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, and the second field indicates link identifier information of a link for which the one or more TWT agreements are requested to be set up; transmitting a fourth frame to the fourth station in response to the third frame; transmitting a fifth frame to the fourth station, where the fifth frame is used to acknowledge that the one or more TWT agreements requested to be set up are accepted; and receiving a sixth frame from the fourth station, where the sixth frame is a response to the fifth frame.

According to a twenty-sixth aspect, a communication method is provided and applied to a fourth station. The method includes: transmitting a third frame to a third station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates link identifier information of a link for which the one or more TWT agreements are requested to be set up, and the one or more TWT agreements correspond to one TWT flow identifier; receiving a fourth frame from the third station, where the fourth frame is a response to the third frame; receiving a fifth frame from the third station, where the fifth frame is used to acknowledge that the one or more TWT agreements requested to be set up are accepted; and transmitting a sixth frame to the third station in response to the fifth frame.

With reference to the twenty-fifth aspect or the twenty-sixth aspect, in a possible implementation, the first field is located in a control field in a TWT element. When the first field indicates that the second field exists in the third frame, the third frame further includes: The second field is located in a TWT parameter information field of the TWT element. In this implementation, the TWT parameter information field may be extended. The control field includes the first field, indicating whether the second field exists in the third frame. If the second field exists in the third frame, the second field is located in the extended TWT parameter information field.

With reference to any one of the twenty-fifth aspect, the twenty-sixth aspect, or the possible implementations of the twenty-fifth aspect or the twenty-sixth aspect, in another possible implementation, the second field is a bitmap, or the second field includes a link identifier of the link for which the one or more TWT agreements are requested to be set up. In this implementation, the information about the link for which the one or more TWT agreements are requested to be set up can be accurately indicated by using the bitmap with low overheads. Alternatively, the second field may carry the link identifier of the link for which the one or more TWT agreements are requested to be set up. After obtaining the second field by parsing, the receive device may clearly know the link identifier of the link for which the one or more TWT agreements are requested to be set up.

With reference to any one of the twenty-fifth aspect, the twenty-sixth aspect, or the possible implementations of the twenty-fifth aspect or the twenty-sixth aspect, in still another possible implementation, a first correspondence exists between a TWT agreement for a first link and link identifier information of the first link, and the first link is any link in one or more links for which a TWT agreement is set up between the first multi-link device and the second multi-link device.

With reference to any one of the twenty-fifth aspect, the twenty-sixth aspect, or the possible implementations of the twenty-fifth aspect or the twenty-sixth aspect, in yet another possible implementation, the first correspondence includes the following combination information: a TWT flow identifier of the TWT agreement, media access control MAC address information of the third station requesting to set up the TWT agreement, MAC address information of the fourth station responding to a setup request, and a link identifier of the first link; or a TWT flow identifier of the TWT agreement, MAC address information of the first multi-link device, MAC address information of the second multi-link device, and a link identifier of the first link. The TWT flow identifier identifies one or more TWT agreements set up between the first multi-link device and the second multi-link device.

With reference to any one of the twenty-fifth aspect, the twenty-sixth aspect, or the possible implementations of the twenty-fifth aspect or the twenty-sixth aspect, in still yet another possible implementation, a second correspondence exists between the TWT agreement for the first link and MAC address information of a multi-link device. The multi-link device includes the first multi-link device and/or the second multi-link device. The first link is any link in one or more links for which a TWT agreement is set up between the first multi-link device and the second multi-link device.

With reference to any one of the twenty-fifth aspect, the twenty-sixth aspect, or the possible implementations of the twenty-fifth aspect or the twenty-sixth aspect, in a further possible implementation, the second correspondence includes the following combination information: a TWT flow identifier of the TWT agreement, media access control MAC address information of the first multi-link device, and MAC address information of the second multi-link device; or a TWT flow identifier of the TWT agreement, MAC address information of a second station, and MAC address information of a first station. The TWT flow identifier identifies a TWT agreement set up between the first multi-link device and the second multi-link device.

According to a twenty-seventh aspect, a communication apparatus is provided, to implement the communication method according to the twenty-third aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a first frame from a second station in a second multi-link device, where the first frame is used to request to tear down a target wake time agreement TWT agreement for a first link, and the first link is any link in one or more links for which a TWT agreement is set up between the first multi-link device and the second multi-link device. The transceiver unit is further configured to transmit a second frame to the second station in response to the first frame.

Further, the processing unit is configured to: tear down, based on a first correspondence, the TWT agreement corresponding to link identifier information of the first link.

Further, the processing unit is configured to: tear down, based on a second correspondence, the TWT agreement corresponding to MAC address information of the multi-link device.

According to a twenty-eighth aspect, a communication apparatus is provided, to implement the communication method according to the twenty-fourth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a first frame to a first station in a first multi-link device, where the first frame is used to request to tear down a target wake time agreement TWT agreement for a first link, and the first link is any link in one or more links for which a TWT agreement is set up between the first multi-link device and the second multi-link device. The transceiver unit is further configured to receive a second frame from the first station, where the second frame is a response to the first frame.

According to a twenty-ninth aspect, a communication apparatus is provided, to implement the communication method according to the twenty-fifth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to receive a third frame from a fourth station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, and the second field indicates link identifier information of a link for which the one or more TWT agreements are requested to be set up. The transceiver unit is further configured to transmit a fourth frame to the fourth station in response to the third frame. The transceiver unit is further configured to transmit a fifth frame to the fourth station, where the fifth frame is used to acknowledge that the one or more TWT agreements requested to be set up are accepted. The transceiver unit is further configured to receive a sixth frame from the fourth station, where the sixth frame is a response to the fifth frame.

According to a thirtieth aspect, a communication apparatus is provided, to implement the communication method according to the twenty-sixth aspect. For example, the communication apparatus may be a chip or a terminal. The foregoing method may be implemented by software, hardware, or hardware executing corresponding software.

In a possible implementation, the communication apparatus may include a transceiver unit and a processing unit. The transceiver unit is configured to transmit a third frame to a third station, where the third frame is used to request to set up one or more target wake time agreements TWT agreements, each TWT agreement corresponds to one link between a first multi-link device and a second multi-link device, the third frame includes a first field, the first field indicates whether a second field exists in the third frame, the second field indicates link identifier information of a link for which the one or more TWT agreements are requested to be set up, and the one or more TWT agreements correspond to one TWT flow identifier. The transceiver unit is further configured to receive a fourth frame from the third station, where the fourth frame is a response to the third frame. The transceiver unit is further configured to receive a fifth frame from the third station, where the fifth frame is used to acknowledge that the one or more TWT agreements requested to be set up are accepted. The transceiver unit is further configured to transmit a sixth frame to the third station in response to the fifth frame.

In a possible implementation, the communication apparatus according to any one of the twenty-seventh aspect to the thirtieth aspect includes a processor coupled to a memory. The processor is configured to support the apparatus in performing a corresponding function in the foregoing communication method. The memory is configured to be coupled to the processor, and stores a program (instructions) necessary for the apparatus and/or data necessary for the apparatus. Optionally, the communication apparatus may further include a communication interface, configured to support communication between the apparatus and another network element. Optionally, the memory may be located inside the communication apparatus, or may be located outside the communication apparatus.

In another possible implementation, the communication apparatus according to any one of the twenty-seventh aspect to the thirtieth aspect includes a processor and a transceiver apparatus. The processor is coupled to the transceiver apparatus. The processor is configured to execute a computer program or instructions, to control the transceiver apparatus to receive and transmit information. When the processor executes the computer program or the instructions, the processor is further configured to perform the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or transmit a signal from the processor to a communication apparatus other than the communication apparatus. When the communication apparatus is the chip, the transceiver apparatus is a transceiver circuit or an input/output interface.

When the communication apparatus according to any one of the twenty-seventh aspect to the thirtieth aspect is the chip, a transmitting unit may be an output unit, for example, an output circuit or a communication interface, and a receiving unit may be an input unit, for example, an input circuit or a communication interface. When the communication apparatus is the terminal, a transmitting unit may be a transmitter or a transmitter machine, and a receiving unit may be a receiver or a receiver machine.

According to a thirty-first aspect, a communication system is provided, including the communication apparatus according to any one of the twenty-seventh aspect or the implementations of the twenty-seventh aspect and the communication apparatus according to any one of the twenty-eighth aspect or the implementations of the twenty-eighth aspect.

According to a thirty-second aspect, a communication system is provided, including the communication apparatus according to any one of the twenty-ninth aspect or the implementations of the twenty-ninth aspect and the communication apparatus according to any one of the thirtieth aspect or the implementations of the thirtieth aspect.

### BRIEF DESCRIPTION OF DRAWINGS

FIG. 1 is a schematic diagram of a structure of a communication system to which this application is applicable;
FIG. 2 is a diagram of an application scenario according to an embodiment of this application;
FIG. 3(a) is a schematic diagram of a system according to an embodiment of this application;
FIG. 3(b) is a schematic diagram of a structure of an AP MLD and a STA MLD that participate in communication according to an embodiment of this application;
FIG. 3(c) is a schematic diagram of a structure of another AP MLD and another STA MLD that participate in communication according to an embodiment of this application;
FIG. 4(a) is a schematic diagram in which an MLD communicates with another device over a plurality of links in a wireless local area network according to an embodiment of this application;
FIG. 4(b) is another schematic diagram in which an MLD communicates with another device over a plurality of links in a wireless local area network according to an embodiment of this application;
FIG. 5 is a schematic diagram of a communication method according to an embodiment of this application;
FIG. 6 is a schematic diagram of setting up a TWT agreement according to an example of this application;
FIG. 7 is a schematic diagram of a format of a TWT element;
FIG. 8(a) is a schematic diagram of a format of a TWT parameter information field when a negotiation type in a TWT element indicates a single-user TWT type;
FIG. 8 (b) is a schematic diagram of a format of a TWT parameter information field when a negotiation type in a TWT element indicates a broadcast TWT type;
FIG. 9 is a schematic diagram of a format of a request type field in a TWT parameter information field;
FIG. 10 is a schematic diagram of a TWT service period on a link after a TWT agreement is set up;
FIG. 11 is a schematic flowchart of another communication method according to an embodiment of this application;
FIG. 12 is a schematic diagram of a format of a TWT flow field in a TWT teardown frame;
FIG. 13 is a schematic flowchart of still another communication method according to an embodiment of this application;
FIG. 14 is a schematic flowchart of yet another communication method according to an embodiment of this application;
FIG. 15 is a schematic diagram of a structure of a communication apparatus according to an embodiment of this application; and
FIG. 16 is a schematic diagram of a structure of another communication apparatus according to an embodiment of this application.

### DESCRIPTION OF EMBODIMENTS

The following describes embodiments of this application with reference to the accompanying drawings in embodiments of this application.

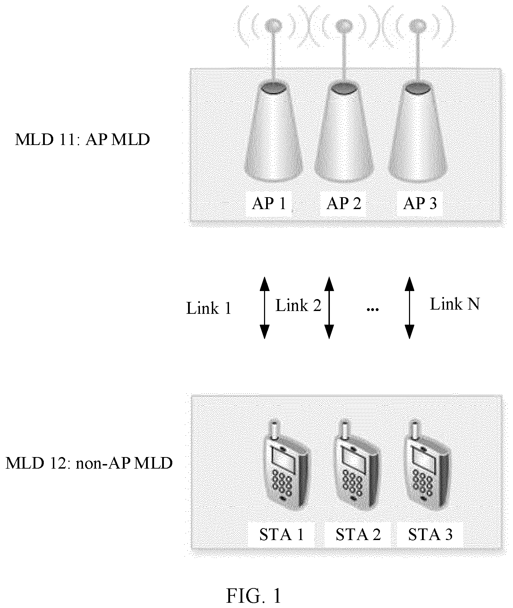

Solutions of this application are mainly applied to a wireless local area network, and in particular, to a multi-link transmission scenario. FIG. 1 is a schematic diagram of a structure of a communication system to which this application is applicable. The communication system 100 includes an MLD 11 and an MLD 12. The MLD 11 and the MLD 12 communicate with each other over N links, and N is a positive integer. If the MLD 11 is used as a transmit device, the MLD 12 is a receive device. If the MLD 12 is used as a transmit device, the MLD 11 is a receive device. A frequency band on which the MLD 11/MLD 12 operates may be any one of the following frequency bands: sub 1 GHz, 2.4 GHz, 5 GHz, 6 GHz, and all or a part of a high frequency 60 GHz, and the like.

The MLD includes one or more affiliated stations, and the affiliated station is a logical station. "A multi-link device includes an affiliated station" is also briefly referred to as "A multi-link device includes a station" in embodiments of this application. The affiliated station may be an access point (access point, AP) or a non-access point station (non-Access Point Station, non-AP STA). For ease of description, in this application, a multi-link device whose affiliated station is an AP may be referred to as a multi-link AP, a multi-link AP device, or an AP multi-link device (AP multi-link device, AP MLD). A multi-link device whose affiliated station is a non-AP STA may be referred to as a multi-link STA, a multi-link STA device, a STA multi-link device (STA multi-link device, STA MLD), or a non-access point multi-link device (non-access point multi-link device, Non-AP MLD). As shown in FIG. 1, the MLD 11 may include one or more access points (access point, AP) (for example, including an AP 1 to an AP 3), and the MLD 11 may also be referred to as an AP MLD. The MLD 12 may include one or more stations (station, STA) (for example, including a STA 1 to a STA 3), and the MLD 12 may also be referred to as a non-AP MLD.

The MLD may implement wireless communication in compliance with 802.11 series protocols, for example, comply with extremely high throughput (extremely high throughput, EHT), or be based on 802.11be or compatible with 802.1 1be, to implement communication with another device. Certainly, the other device may be a multi-link device, or may not be a multi-link device.

Each logical station may operate on one link, but a plurality of logical stations are allowed to operate on a same link. A link identifier mentioned below indicates one station operating on one link. In other words, if there is more than one logical station on one link, more than one link identifier is required to indicate the logical stations. The link identifier mentioned below may alternatively indicate a station operating on the link. When data transmission is performed between a multi-link device and another multi-link device, before communication, the multi-link device and the another multi-link device may first negotiate or communicate with each other about a correspondence between a link identifier and a link or a station on a link. Alternatively, an AP multi-link device indicates a correspondence between a link identifier and a link or a station on a link by using a broadcast management frame, for example, a beacon frame (beacon frame). Therefore, during data transmission, a link identifier is carried to indicate a link or a station on a link, instead of transmitting a large amount of signaling information for indication. This reduces signaling overheads and improves transmission efficiency.

The following uses an example in which the foregoing MLD is an AP MLD and the foregoing another MLD is a STA MLD for description. For example, when the AP MLD sets up a BSS, a management frame, for example, a beacon frame, transmitted by the AP MLD carries an element including a plurality of link identifier information fields. A correspondence between a link identifier and a station operating on a link may be set up based on each link identifier information field. Each link identifier information field includes a link identifier, and further includes one or more of a media access control (media access control, MAC) address of an AP (or may also be referred to as a basic service set identifier (basic service set identifier, BSSID) of the AP), an operation set, and a channel number. One or more or all of the MAC address, the operation set, and the channel number may indicate one link. In another example, in a process of multi-link device association, an AP MLD and a STA MLD negotiate a plurality of link identifier information fields. In subsequent communication, a link identifier is used by the AP MLD or the STA MLD to indicate a station of the MLD. The link identifier may further indicate one or more attributes of a MAC address, an operating operation set, and a channel number of the station. The MAC address may alternatively be replaced with an association identifier of the AP MLD after association. Optionally, if a plurality of stations operate on one link, the link identifier (which is a numeric identifier) indicates not only the operation set in which the link is located and the channel number, but also an identifier of a station operating on the link, for example, a MAC address or an association identifier (association identifier, AID) of the station.

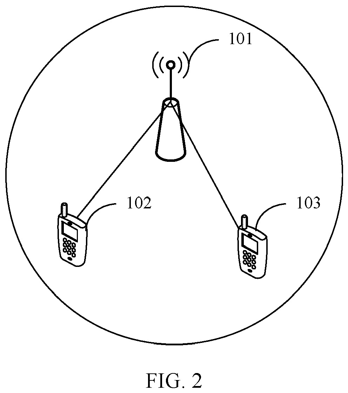

FIG. 2 is a diagram of an application scenario according to an embodiment of this application. The application scenario includes a station 101 and a station 102, and may further include a station 103. The station 101 may communicate with the station 102 and the station 101 may communicate with the station 103 over a plurality of links, to improve a throughput. Communication between the station 101 and the station 102 is used as an example. The station 101/102 may be an MLD, or may be a single-link device. In a scenario, the station 101 is an AP MLD, and the station 102 is a STA MLD or a station (for example, a single-link station). In another scenario, the station 101 is a STA MLD, and the station 102 is an AP (for example, a single-link AP) or an AP MLD. In still another scenario, the station 101 is an AP MLD, and the station 102 is an AP MLD or an AP. In yet another scenario, the station 101 is a STA MI,D, and the station 102 is a STA MLD or a STA. Certainly, the wireless local area network may further include another device. A quantity and types of devices shown in FIG. 2 are merely examples.

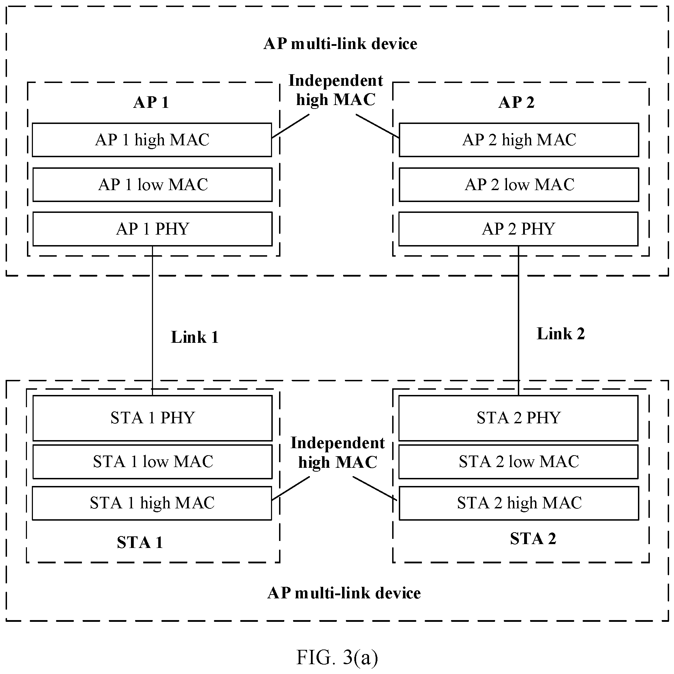

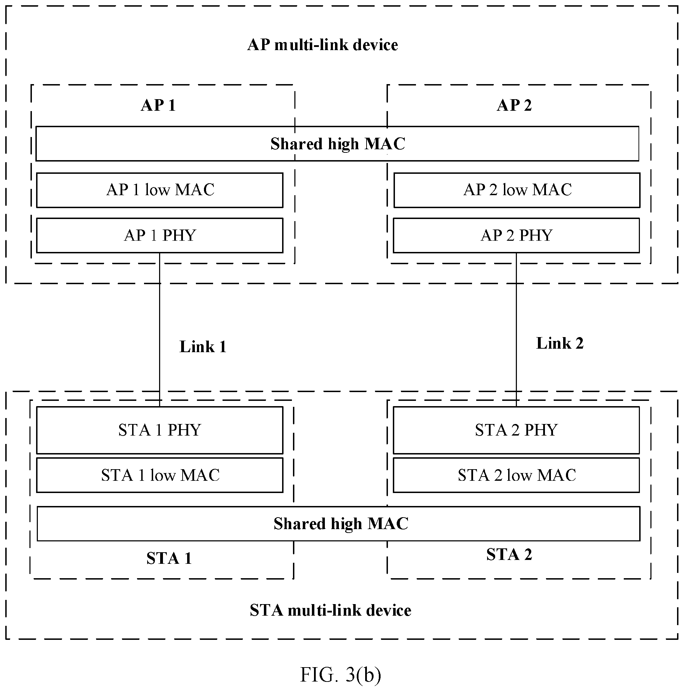

FIG. 3(a) and FIG. 3(b) are schematic diagrams of structures of an AP MLD and a STA MLD that participate in communication. 802.11 standards focus on 802.11 physical layers (physical layer, PHY) and MAC layers of AP MLDs and STAMLDs (such as mobile phones and laptop computers). As shown in FIG. 3(a), a plurality of APs included in the AP MLD are independent of each other at a low MAC (low MAC) layer and a PHY layer, and are also independent of each other at a high MAC (high MAC) layer. A plurality of STAs included in the STA MLD are independent of each other at the low MAC layer and the PHY layer, and are also independent of each other at the high MAC layer.

As shown in FIG. 3(b), a plurality of APs included in the AP MLD are independent of each other at a low MAC layer and a PHY layer, and share a high MAC layer. A plurality of STAs included in the STA MLD are independent of each other at the low MAC layer and the PHY layer, and share the high MAC layer.

Certainly, the STA MLD may use an independent structure at the high MAC layer, and the AP MLD uses a shared structure at the high MAC layer. Alternatively, the STA MLD may use a shared structure at the high MAC layer, and the AP MLD uses an independent structure at the high MAC layer. For example, the high MAC layer or the low MAC layer may be implemented by one processor in a chip system of the MLD, or may be implemented by different processing modules in a chip system.

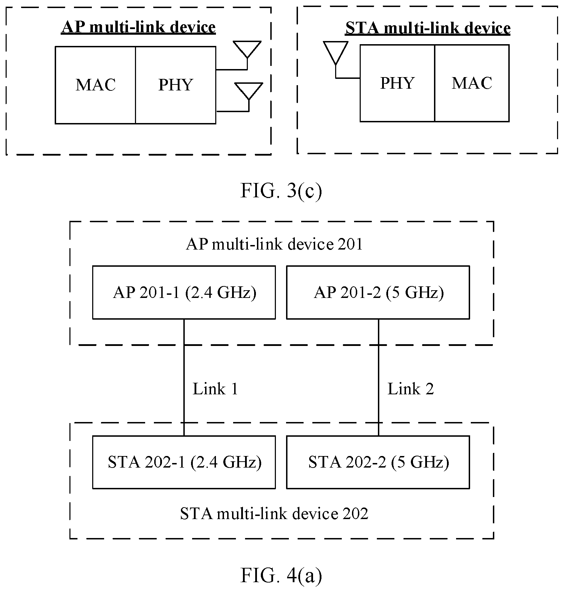

For example, the MLD in this embodiment of this application may be a single-antenna device, or may be a multi-antenna device. For example, the MLD may be a device with more than two antennas. A quantity of antennas included in the MLD is not limited in this embodiment of this application. FIG. 3(c) shows an example in which an AP MLD has a plurality of antennas and a STA MLD has a single antenna. In this embodiment of this application, the MLD may allow services of a same access type to be transmitted over different links, or even allow a same data packet to be transmitted over different links. Alternatively, the MLD may not allow services of a same access type to be transmitted over different links, but may allow services of different access types to be transmitted over different links.

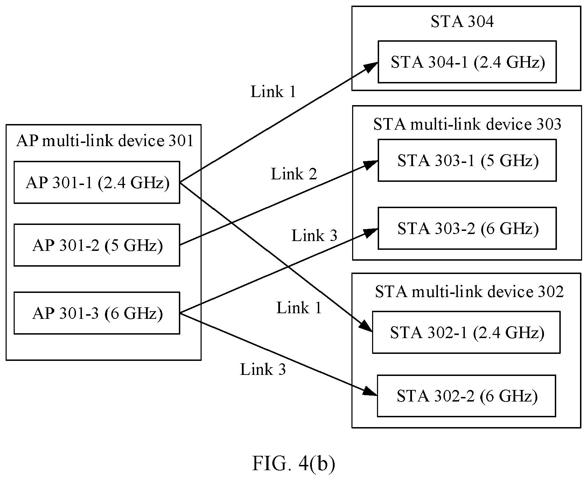

A frequency band on which the MLD operates may include but is not limited to sub 1 GHz, 2.4 GHz, 5 GHz, 6 GHz, and a high frequency 60 GHz. FIG. 4(a) and FIG. 4(b) show two schematic diagrams of communication between an MLD and another device over a plurality of links in a wireless local area network.

FIG. 4(a) shows a scenario in which an AP MLD 201 communicates with a STA MLD 202. The AP MLD 201 includes an affiliated AP 201-1 and an affiliated AP 201-2. The STA MLD 202 includes an affiliated STA 202-1 and an affiliated STA 202-2. The AP MLD 201 and the STA MLD 202 communicate in parallel over a link 1 and a link 2.

FIG. 4(b) shows a scenario in which an AP MLD 301 communicates with a STA MLD 302, a STA MLD 303, and a STA 304. The AP MLD 301 includes an affiliated AP 301-1 to an affiliated AP 301-3. The STA MLD 302 includes an affiliated STA 302-1 and an affiliated STA 302-2. The STA MLD 303 includes an affiliated STA 303-1 and an affiliated STA 303-2. The STA 304 is a single-link device. The AP MLD may separately communicate with the STA MLD 302 over the link 1 and the link 3, communicate with the multi-link device 303 over the link 2 and the link 3, and communicate with the STA 304 over the link 1. In an example, the STA 304 operates on a 2.4 GHz frequency band. The STA MLD 303 includes the STA 303-1 and the STA 303-2, the STA 303-1 operates on a 5 GHz frequency band, and the STA 303-2 operates on a 6 GHz frequency band. The STAMLD 302 includes the STA 302-1 and the STA 302-2, the STA 302-1 operates on the 2.4 GHz frequency band, and the STA 302-2 operates on the 6 GHz frequency band. The AP 301-1 that operates on the 2.4 GHz frequency band and that is in the AP MLD may perform, over the link 1, uplink or downlink data transmission with the STA 304 and the STA 302-2 in the STA MLD 302. The AP 301-2 that operates on the 5 GHz frequency band and that is in the AP MLD may perform, over the link 2, uplink or downlink data transmission with the STA 303-1 that operates on the 5 GHz frequency band and that is in the STA MLD 303. The AP 301-3 that operates on the 6 GHz frequency band and that is in the AP MLD 301 may perform, over the link 3, uplink or downlink data transmission with the STA 302-2 that operates on the 6 GHz frequency band and that is in the STA MLD 302, and may further perform, over the link 3, uplink or downlink data transmission with the STA 303-2 in the STA MLD.

It should be noted that FIG. 4(a) only shows that the AP MLD supports two frequency bands. FIG. 4(b) shows only an example in which the AP MLD supports three frequency bands (2.4 GHz, 5 GHz, and 6 GHz), each frequency band corresponds to one link, and the AP MLD 101 may operate on one or more links of the link 1, the link 2, or the link 3. On an AP side or a STA side, the link herein may also be understood as a station operating on the link. During actual application, the AP MLD and the STA MLD may further support more or fewer frequency bands. In other words, the AP MLD and the STA MLD may operate on more links or fewer links. This is not limited in embodiments of this application.

For example, the MLD is an apparatus having a wireless communication function. The apparatus may be an entire device, or may be a chip, a processing system, or the like installed in the entire device. The device on which the chip or the processing system is installed may be controlled by the chip or the processing system, to perform the method and functions in embodiments of this application. For example, the multi-link STA in this embodiment of this application has a wireless transceiver function, may support the 802.11 series protocols, and may communicate with the multi-link AP, another multi-link STA, or a single-link device. For example, the multi-link STA is any user communication device that allows a user to communicate with an AP and then with the WLAN. For example, the multi-link STA may be user equipment that can be connected to the Internet such as a tablet computer, a desktop computer, a laptop computer, or a notebook computer, an ultra-mobile personal computer (ultra-mobile personal computer, UMPC), a handheld computer, a netbook, a personal digital assistant (personal digital assistant, PDA), or a mobile phone, an Internet of things node in an Internet of things, a vehicle-mounted communication apparatus in an Internet of vehicles, or the like. The multi-link STA may further be a chip and a processing system in the foregoing terminals. The multi-link AP in this embodiment of this application is an apparatus providing a service to the multi-link STA, and may support the 802.11 series protocols. For example, the multi-link AP may be a communication entity such as a communication server, a router, a switch, or a network bridge. Alternatively, the multi-link AP may include various forms of macro base stations, micro base stations, relay stations, or the like. Certainly, the multi-link AP may further be a chip and a processing system in the various forms of devices, to perform the method and functions in embodiments of this application. In addition, the MLD may support high-rate and low-latency transmission. With continuous evolution of application scenarios of a wireless local area network, the MLD may be further applied to more scenarios, for example, a sensor node (for example, a smart meter, a smart electricity meter, and a smart air detection node) in a smart city, a smart device (for example, a smart camera, a projector, a display, a TV, a stereo, a refrigerator, and a washing machine) in smart home, a node in the Internet of things, an entertainment terminal (for example, a wearable device such as an augmented reality (augmented reality, AR) and a virtual reality (virtual reality, VR)), a smart device (such as a printer and a projector) in a smart office, an Internet of things device in the Internet of vehicles, and some infrastructures (for example, a vending machine, a self-service navigation station of a supermarket, a self-service cash register device, and a self-service ordering machine) in daily life scenarios. Specific forms of the multi-link STA and the multi-link AP are not specifically limited in embodiments of this application, and are merely examples for description herein. The 802.11 series protocols may include 802.11be, 802.11ax, 802.11a/b/g/n/ac, and a Wi-Fi protocol that may appear in the future.

In the existing 802.11REVmd D5.0 protocol, a TWT agreement is bound to three elements: <TWT flow identifier (TWT flow identifier), media access control address information (MAC address of TWT requesting STA) of a TWT requesting station, and media access control address information (MAC address of TWT responding STA) of a TWT responding station>. The TWT requesting station is a station transmitting a TWT agreement request (a TWT request frame, which may also be referred to as a TWT setup frame or a TWT setup request frame), and the TWT responding station is a station that responds to the TWT agreement request (a TWT response frame). The MAC address information includes a MAC address or an AID. This is not limited in this application. For a TWT agreement set up by two single-link stations, if the TWT agreement for the link needs to be torn down, a single-link transmitting station transmits a TWT teardown frame (TWT teardown frame) to a single-link receiving station, and the TWT agreement may be directly torn down. However, for a TWT agreement set up between multi-link devices, in a multi-link device operation, a TWT agreement for a link 2 may be set up on another link (a link 1). According to the existing protocol, the MAC address of the TWT requesting station and the MAC address of the TWT responding station in the three elements of the TWT agreement are MAC addresses of two stations located on the other link (the link 1). According to a current specification, the TWT agreement for the link can be successfully torn down only when the three elements are met, and the TWT agreement for the link 2 can be torn down only by a station on the link 1. This lacks flexibility. For example, it is assumed that the station on the link 1 sets up the TWT agreement for the link 2, and a transmitting station on the link 2 transmits a teardown frame to a receiving station on the link 2, to request to tear down the TWT agreement for the link 2. However, after the receiving station receives the teardown frame, MAC address information of the TWT requesting station is, by default, MAC address information of the transmitting station on the link 2, instead of MAC address information of a requesting station on the link 1 that originally sets up the TWT agreement. As a result, the station on the link 2 cannot tear down the TWT agreement set up for the link 1. The method of tearing down the TWT agreement is not flexible.

Based on the foregoing architecture, an embodiment of this application provides a communication method. A fourth station (belonging to a multi-link device) transmits a third frame to a third station (belonging to a multi-link device). The third frame is used to request to set up one or more target wake time agreements (target wake time agreement, TWT agreement). Each TWT agreement corresponds to one link between a first multi-link device and a second multi-link device. The third frame includes a first field. The first field indicates whether a second field exists in the third frame. The second field indicates link identifier information of a link for which the one or more TWT agreements are requested to be set up. The third station transmits a fourth frame to the fourth station in response to the third frame. In this embodiment of this application, the third frame for requesting to set up the TWT agreement indicates the information about the link for which the one or more TWT agreements are requested to be set up, so that the TWT agreement is associated with the link, thereby improving accuracy of identifying the TWT agreement for the link.

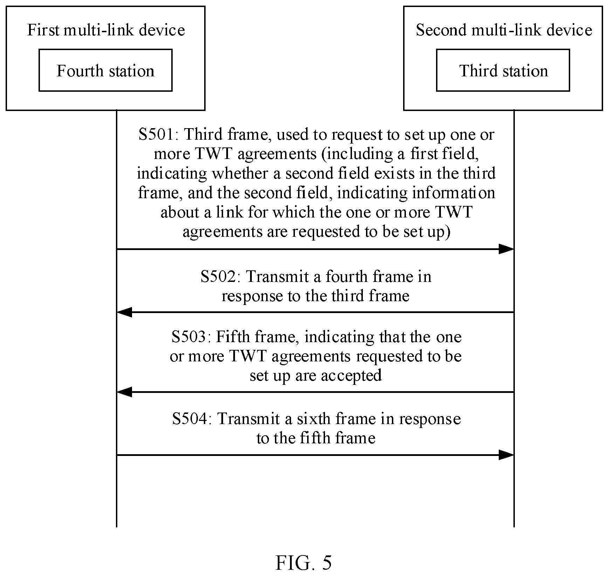

FIG. 5 is a schematic diagram of a communication method according to an embodiment of this application. The method is a TWT agreement setup procedure. The method may include the following steps.

S501: A fourth station transmits a third frame to a third station.

Correspondingly, the third station receives the third frame.

The third frame is used to request to set up one or more TWT agreements. Each TWT agreement corresponds to one link between a first multi-link device and a second multi-link device. The one or more TWT agreements correspond to one TWT flow identifier (TWT flow identifier). In this application, the TWT agreement may also be referred to as a TWT agreement, a TWT contract, TWT compliance, or the like. This is not limited herein.

The third station may be an AP, and the fourth station is a non-AP STA. Alternatively, the third station may be a non-AP STA, and the fourth station is an AP. This embodiment is described by using an example in which the first multi-link device is a non-AP MLD, the second multi-link device is an AP MLD, the fourth station is a non-AP STA, and the third station is an AP. In this case, the fourth station is located in the first multi-link device, and the third station is located in the second multi-link device. Certainly, the first multi-link device may include more APs, and the second multi-link device may include more non-AP STAs.

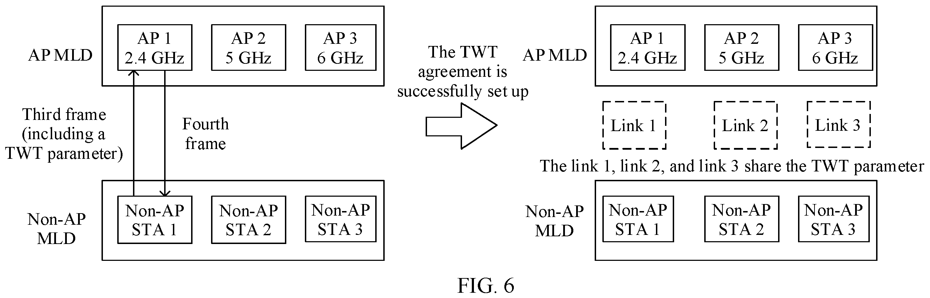

FIG. 6 is a schematic diagram of setting up an example TWT agreement. There are two MLDs in the figure: an AP MLD and a non-AP MLD. The AP MLD has three affiliated AP stations: an AP 1, an AP 2, and an AP 3, which operate at 2.4 GHz, 5 GHz, and 6 GHz respectively. The non-AP MLD has three affiliated non-AP stations: a STA 1, a STA 2, and a STA 3. The following three links have been set up between the AP MLD and non-AP MLD:
link 1: between the AP 1 and the STA 1;
link 2: between the AP 2 and the STA 2; and
link 3: between the AP 3 and the STA 3.

The stations of the two MLDs may set up a TWT agreement by transmitting a third frame, for example, a TWT setup frame, to each other, where the third frame includes a TWT element. The following describes the TWT element and parameter information of the TWT element.

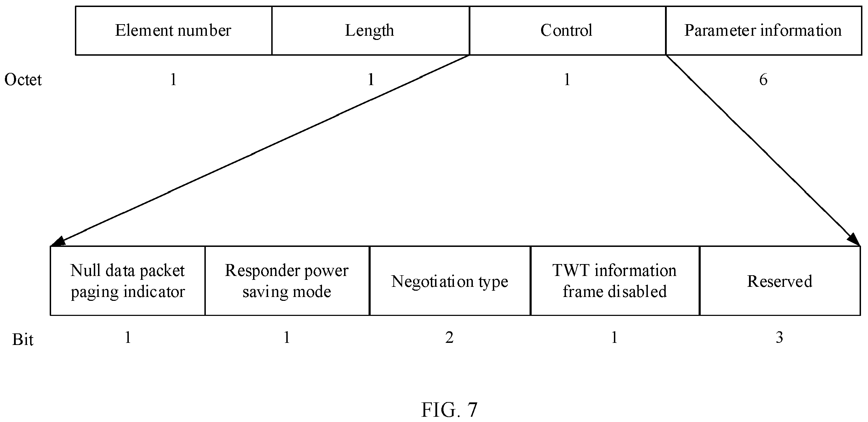

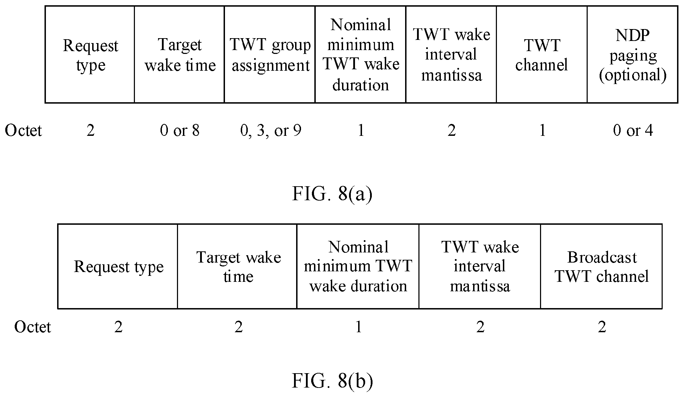

FIG. 7 is a schematic diagram of a format of a TWT element. The TWT element includes element number, length, control, and TWT parameter information fields. The control field further includes fields such as a null data packet paging (null data packet paging, NDP paging) indicator, a responder power saving mode, a negotiation type, and TWT information frame disabling. The negotiation type includes a single-user TWT type and a broadcast TWT type. When the negotiation type indicates the single-user TWT type, a format of the TWT parameter information field is shown in FIG. 8(a), and includes a request type, a target wake time, TWT group assignment, nominal minimum TWT wake duration (nominal minimum TWT wake duration), a TWT wake interval mantissa, a TWT channel, and null data packet paging. When the negotiation type indicates the broadcast TWT type, the TWT parameter information field is shown in FIG. 8(b), and includes a request type, a target wake time, nominal minimum TWT wake duration, a TWT wake interval mantissa, and a broadcast TWT channel. TWT wake interval = TWT wake duration mantissa × 2^{(TWT wake interval exponent)}.

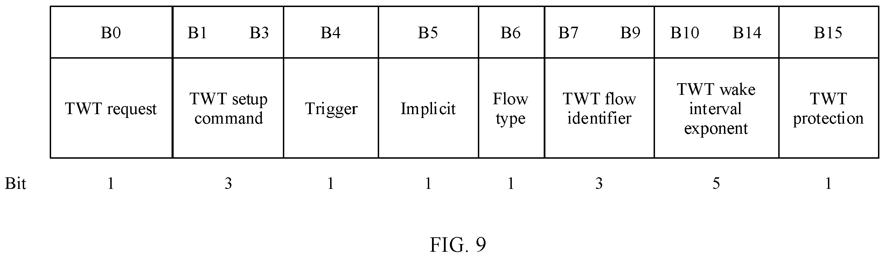

In addition, the request type of the TWT parameter information field includes some parameters related to a TWT request and response, as shown in FIG. 9. Specifically, the request type includes the TWT request, a TWT setup command (TWT setup command), a trigger, implicit (Implicit), a flow type (flow type), a TWT flow identifier (TWT flow identifier), a TWT wake interval exponent, and TWT protection. The TWT flow identifier uniquely identifies one or more TWT agreements requested to be set up between a first multi-link device and a second multi-link device. The TWT flow identifier may also be referred to as a TWT flow identifier or the like. Each TWT agreement corresponds to one link, but the one or more TWT agreements correspond to one TWT flow identifier. In other words, one TWT element may be used to set up a plurality of TWT agreements. A fourth station may perform TWT negotiation for a link on which the fourth station is located or another link by transmitting a third frame (including the foregoing TWT element) over the link on which the fourth station is located, to set up a TWT agreement. Each TWT agreement corresponds to one link between the first multi-link device and the second multi-link device. The link for transmitting the TWT element needs to be in an awake (awake) state, and another link may be in the awake state or a doze (doze) state.

Still refer to FIG. 6. In an example, the non-AP STA 1 transmits the third frame over the link 1, and the link 1, the link 2 and the link 3 perform TWT negotiation. Step S401 specifically includes the following steps.

The non-AP STA 1 transmits a management frame including a TWT element, for example, a TWT setup frame (TWT Setup frame), to the AP 1. The TWT element has the following features:
(a) The TWT element indicates that a TWT agreement is requested to be set up for three links on which the AP 1, the AP 2, and the AP 3 are located (the three links are the link 1, the link 2, and the link 3).
(b) The TWT element carries a value of a request TWT (Request TWT) in a TWT set command field in a request type field.
(c) A value of a TWT request field of the TWT element is equal to 1, indicating that the management frame is a request frame (Request frame).
(d) The TWT element indicates a target wake time and nominal minimum TWT wake duration. In this embodiment, the third frame further includes a first field. The first field indicates whether a second field exists in the third frame. The second field indicates link identifier information of a link for which one or more TWT agreements are requested to be set up.

In a specific implementation, the first field is located in a control field of the TWT element. For example, the first field may be located in a reserved field of the control field shown in FIG. 7. The first field may include one bit. For example, if the first field is set to "1", it indicates that the second field exists in the third frame. If the first field is set to "0", it indicates that the second field does not exist in the third frame. Alternatively, if the first field is set to "0", it indicates that the second field exists in the third frame. If the first field is set to "1", it indicates that the second field does not exist in the third frame

When the first field indicates that the second field exists in the third frame, the third frame further includes the second field. The second field may be located in a TWT parameter information field of the TWT element.

Specifically, in an implementation, the second field may be a bitmap. Accordingly, the first field may be referred to as a link identifier bitmap present field. For example, the three links, namely, the link 1 to the link 3, have been set up between the AP MLD and the non-AP MLD shown in FIG. 6. It is assumed that the TWT agreement is requested to be set up for the link 2 and the link 3. In this case, the second field may be 011, which respectively correspond to the link 1 to the link 3, where "0" indicates that the TWT agreement is not set up, and "1" indicates that the TWT agreement is set up. Alternatively, the second field may be 100, which respectively correspond to the link 1 to the link 3, where " 1" indicates that the TWT agreement is not set up, and "0" indicates that the TWT agreement is set up.

In another implementation, the second field may include a link identifier (link identifier, link ID) of the link for which the one or more TWT agreements are requested to be set up. Preferably, a link identifier field is used. For example, the second field is the link identifier field, and link identifiers of links for which the one or more TWT agreements are requested to be set up are included in the field. Accordingly, the first field may be referred to as a link identifier present field. The link identifier identifies a combination: <an operating class (operating class) of the link, a channel number (channel number), and a basic service set identifier (basic service set identifier, BSSID) of the AP>. Still refer to FIG. 6. It is assumed that a maximum of 16 links (a link 0 to a link 15) may be set up between the AP MLD and the non-AP MLD. The 16 links may be indicated by using 4 bits, where 0000 corresponds to the link 0, 0001 corresponds to the link 1, 0010 corresponds to the link 2, and the like. In this case, it is assumed that three links, namely, a link 0 to a link 3, have been set up between the AP MLD and the non-AP MLD in an association phase. In addition, it is assumed that a TWT setup frame is transmitted on the link 1 to request the link 21 to set up a TWT agreement. In this case, the second field includes a link 2 identifier, for example, 0001. The 4-bit indicator provided herein is merely an example, and a correspondence between a quantity of bits and a link identifier is not limited in this application. With development of technologies, there may be an increasing quantity of links that can be used in a communication process, and an increase and a change of a quantity of bits of a link identifier are not limited herein. S502: The third station transmits a fourth frame to the fourth station in response to the third frame. In other words, the fourth frame is a response to the third frame, for example, an acknowledgment frame Ack.

Correspondingly, the fourth station receives the fourth frame.

S503: The third station transmits a fifth frame to the fourth station.

Correspondingly, the fourth station receives the fifth frame.

The fifth frame indicates that the one or more TWT agreements requested to be set up are accepted. Specifically, still refer to FIG. 6. Step S503 specifically includes: The AP 1 transmits a management frame including a TWT element, for example, a TWT setup frame, to the non-AP STA 1. The TWT element has the following features:
(a) The TWT element carries a value of an accept TWT (Accept TWT) field in a TWT set command field in a request type.
(b) A value of a TWT request field of the TWT element is equal to 0, indicating a response frame (Response frame).
(c) The TWT element transmitted by the AP 1 acknowledges that three TWT agreements that the non-AP STA 1 requests to set up are accepted.

S504: The fourth station transmits a sixth frame to the third station in response to the fifth frame. In other words, the sixth frame is a response to the fifth frame, for example, an acknowledgment frame Ack.

Correspondingly, the third station receives the sixth frame.

After the preceding steps are successfully completed, the TWT agreement is successfully set up for the link 1, the link 2, and the link 3.

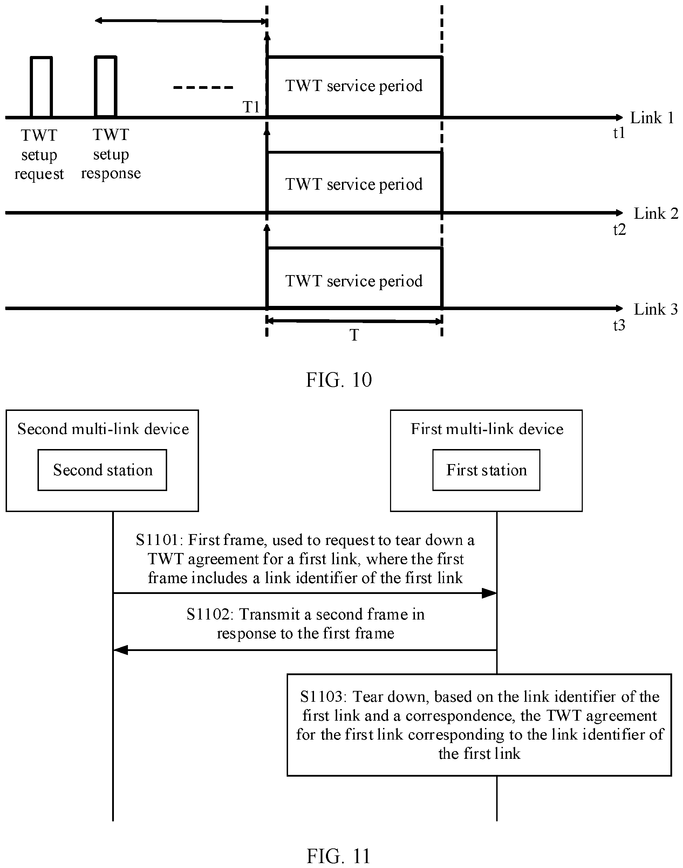

In this case, as shown in FIG. 10, there are three TWT service periods (service periods, SPs) for the three links, and they share a TWT parameter, for example, target wake-up duration. T1 is a target wake time. A TWT wake interval is duration between two adjacent SPs for a same link. TWT wake interval = TWT wake interval mantissa × 2^{(TWT wake interval exponent)}, where the wake interval indicates a number field located in the request type field.

After the one or more TWT agreements are set up, a correspondence exists between a TWT flow identifier and a link of a link for one or more TWT agreements are set up. In other words, a correspondence exists between the TWT flow identifier and a link on which each TWT agreement is located. Specifically, when the second field includes the link identifier of the link for which the one or more TWT agreements are requested to be set up, a correspondence exists between the TWT flow identifier and a link identifier of the link on which each TWT agreement is located. When the second field is a bitmap, the link identifier of the link for which the one or more TWT agreements are requested to be set up may be obtained, so that a correspondence exists between the TWT flow identifier and a link identifier of the link for which each TWT agreement is set up. In addition, the correspondence may further include at least one of the following information: MAC address information of a station requesting to set up the TWT agreement (namely, MAC address information of the third station), MAC address information of a station responding to a setup request (namely, MAC address information of the fourth station), MAC address information of an MLD requesting to set up the TWT agreement (namely, MAC address information of the second multi-link device), MAC address information of an MLD responding to a setup request (namely, MAC address information of the first multi-link device), and MAC address information of stations on two sides that set up the TWT agreement. The stations on the two sides that set up the TWT agreement are stations at two ends of any link on which one or more set-up TWT agreements are located. In other words, the MAC address information of stations on two sides that set up the TWT agreement is MAC address information of a station 1 setting up the TWT agreement, and MAC address information of a station 2 setting up the TWT agreement. For example, if a TWT agreement is set up for the link 1 and the link 2 by using a ninth frame and a tenth frame (where the link 1 and the link 2 are indicated by a link identifier information field), two TWT agreements are set up. In a TWT agreement 1, a station corresponding to the MAC address information of the station 1 setting up the TWT agreement is a station that operates on the link 1 and that is affiliated with an MLD with which a TWT requesting station (the fourth station in the first multi-link device) is affiliated. A station corresponding to the MAC address information of the station 2 setting up the TWT agreement is a station that operates on the link 1 and that is affiliated with an MLD with which a TWT responding station (the third station in the second multi-link device) is affiliated. In a TWT agreement 2, a station corresponding to the MAC address information of the station 1 setting up the TWT agreement is a station that operates on the link 2 and that is affiliated with an MLD with which the TWT requesting station (the fourth station in the first multi-link device) is affiliated. A station corresponding to the MAC address information of the station 2 setting up the TWT agreement is a station that operates on the link 2 and that is affiliated with an MLD with which the TWT responding station (the third station in the second multi-link device) is affiliated. The TWT requesting station and the TWT responding station operate on a same link. Otherwise, the TWT requesting station and the TWT responding station cannot directly receive information transmitted by each other. Optionally, the link 1 is not a link on which the fourth station and the third station operate. Optionally, the link 1 is a link on which the fourth station and the third station operate. Optionally, the link 2 is not a link on which the fourth station and the third station operate. Optionally, the link 2 is a link on which the fourth station and the third station operate. In this case, the foregoing correspondence may be one of the following:
(1) <a TWT flow identifier, MAC address information of a station requesting to set up a TWT agreement, MAC address information of a station responding to a setup request, and a link identifier>;
(2) <a TWT flow identifier, MAC address information of an MLD requesting to set up a TWT agreement, MAC address information of an MLD responding to a setup request, and a link identifier>; and
(3) <a TWT flow identifier, MAC address information of a station 1 setting up a TWT agreement, and MAC address information of a station 2 setting up the TWT agreement>.

Optionally, the correspondence 3 may be understood as <a TWT flow identifier, MAC address information of a fifth station setting up the TWT agreement, and MAC address information of a sixth station setting up the TWT agreement>. The fifth station and the sixth station are stations on a second link, and the second link is any link in one or more links for which a TWT agreement is set up between the first multi-link device and the second multi-link device. Optionally, the correspondence 3 may be further understood as <a TWT flow identifier, MAC address information of a station requesting to set up a TWT agreement, and MAC address information of a station responding to a setup request>. In this case, the station requesting to set up the TWT agreement is no longer the station transmitting the third frame (a TWT setup request frame, which may also be referred to as a TWT setup frame, a TWT request frame, or a TWT agreement request), but the station 1 setting up the TWT agreement. The station 1 and the TWT requesting station are affiliated with a same multi-link device, and operate on a link indicated by a link identifier information field. The station responding to setup of the TWT agreement is no longer a station transmitting a fourth frame (a TWT setup response frame or a response to a TWT agreement request), but the station 2 setting up the TWT agreement. The station 2 and the TWT responding station are affiliated with a same multi-link device, and operate on the link indicated by the link identifier information field. It may be understood that the station requesting to set up the TWT agreement and the TWT requesting station are a same station, and the station responding to a setup request and the TWT responding station are a same station. The two expressions are applicable to all embodiments of the present invention. Names, terms, and the like that represent stations in embodiments of the present invention are merely examples, and embodiments may be mutually referenced and combined.

According to a communication method provided in an embodiment of this application, a third frame for requesting to set up a TWT agreement indicates information about a link for which one or more TWT agreements are requested to be set up, so that the TWT agreement is associated with the link.

After TWT agreements on one or more links are set up, if a TWT agreement for a link needs to be torn down, the TWT agreement for the link can be requested to be torn down. An embodiment of this application further provides a communication method. A second station in a second multi-link device transmits a first frame to a first station in a first multi-link device, to request to tear down a TWT agreement for a first link. The first frame includes a link identifier information field of the first link, and the link identifier information field includes a link identifier or a link identifier bitmap. In the link identifier bitmap, a bit location corresponding to the first link is set to a first value, where the first value may be 0 or 1. The first link is any link in one or more links for which a TWT agreement is set up between the first multi-link device and the second multi-link device. The first station transmits a second frame to the second station in response to the first frame. A TWT agreement for a link may be uniquely determined based on the link identifier of the first link and a TWT flow identifier. Any station in the first multi-link device and the second multi-link device may request to tear down the TWT agreement for the first link, thereby improving flexibility of tearing down the TWT agreement.

FIG. 11 is a schematic flowchart of another communication method according to an embodiment of this application. The method includes the following steps.

S1101: A second station in the second multi-link device transmits a first frame to a first station in the first multi-link device.

Correspondingly, the first station receives the first frame.

In the foregoing embodiment, a TWT agreement has been set up for the first link or more links between the first multi-link device and the second multi-link device. In this embodiment, the TWT agreement for the first link needs to be torn down. The second station transmits the first frame to the first station. The first frame is used to request to tear down the TWT agreement for the first link. The first link is any link in one or more links for which a TWT agreement is set up between the first multi-link device and the second multi-link device.

Alternatively, the first station may be an AP or a non-AP STA, and the second station may be a non-AP STA or an AP. The first station may be a same station as the fourth station requesting to set up the TWT agreement in the foregoing embodiment, may be a different station from the fourth station, may be a same station as the third station in the foregoing embodiment, or may be a different station from the third station. The second station may be a same station as the fourth station requesting to set up the TWT agreement in the foregoing embodiment, may be different from the fourth station, may be a same station as the third station in the foregoing embodiment, or may be different from the third station.

Still refer to FIG. 6. It is assumed that the first multi-link device is a non-AP MLD, and the second multi-link device is an AP MLD. TWT agreements on the link 1 to the link 3 have been set up for the link 1, and a TWT agreement for the link 3 needs to be torn down. The first station may be any station in the non-AP STA 1 to a non-AP STA 3. It is assumed that the first station herein is the non-AP STA 2. The second station may be any station in an AP 1 to an AP 3. It is assumed that the second station herein is the AP 2.

In this embodiment, the first frame includes a link identifier information field of the first link, including a link identifier or a link identifier bitmap. In the link identifier bitmap, a bit location corresponding to the first link is set to a first value, for example, 0 or 1.

The first frame may be a TWT teardown frame (TWT Teardown frame). A format of the TWT teardown frame is shown in the following Table 1.

**Table 1**

| Order (order) in the teardown frame | Information (information) |
|---|---|
| 1 | Category |
| 2 | unprotected sub 1 GHz action |
| 3 | TWT flow |

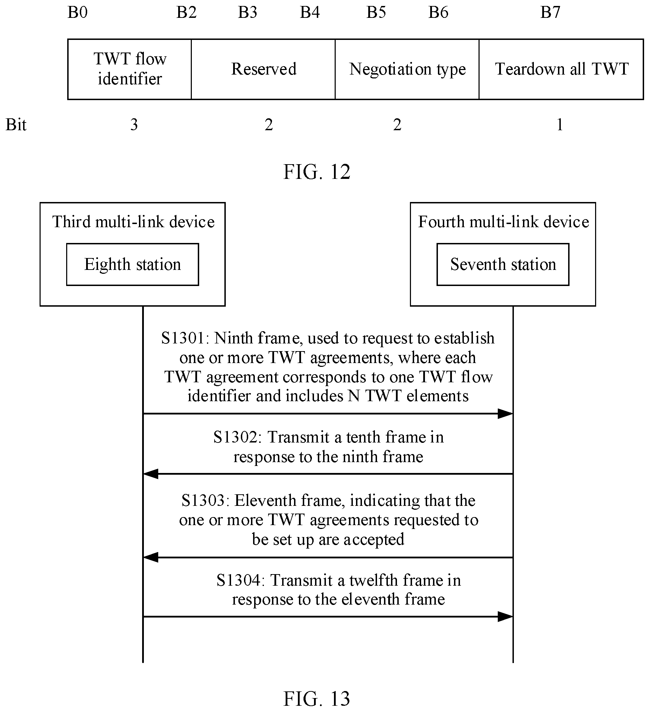

The TWT teardown frame includes the following information: a category (category), an unprotected sub 1 GHz action (unprotected S1G action), and a TWT flow (TWT flow). A format of the TWT flow is shown in FIG. 12, and the TWT flow further includes a TWT flow identifier field, a reserved field, a negotiation field, and a teardown all TWT (teardown all TWT) field. The link identifier may be located in a TWT flow field of the TWT teardown frame. In an existing protocol, the TWT flow identifier field occupies three bits. Optionally, the TWT flow identifier field is extended from three bits to more bits, for example, four bits. This is not limited herein. The TWT flow field further includes a link identifier information field, for example, a 4-bit link identifier field.

After the TWT agreement is set up, a correspondence exists between the TWT flow identifier and the link for which the one or more TWT agreements are requested to be set up. Specifically, a correspondence exists between the TWT flow identifier and the link identifier of the link for which the one or more TWT agreements are requested to be set up. The set-up TWT agreement corresponds to one TWT flow identifier.

In addition, the correspondence may further include at least one of the following information: MAC address information of a station requesting to set up the TWT agreement (namely, MAC address information of the third station), MAC address information of a station responding to a setup request (namely, MAC address information of the fourth station), MAC address information of an MLD requesting to set up the TWT agreement (namely, MAC address information of the second multi-link device), MAC address information of an MLD responding to a setup request (namely, MAC address information of the first multi-link device), MAC address information of a station 1 setting up the TWT agreement, and MAC address information of a station 2 setting up the TWT agreement.

In this case, the foregoing correspondence may be one of the following:
(1) <a TWT flow identifier, MAC address information of a station requesting to set up a TWT agreement, MAC address information of a station responding to a setup request, and a link identifier>;
(2) <a TWT flow identifier, MAC address information of an MLD requesting to set up a TWT agreement, MAC address information of an MLD responding to a setup request, and a link identifier>; and
(3) <a TWT flow identifier, MAC address information of a station 1 setting up a TWT agreement, and MAC address information of a station 2 setting up the TWT agreement>.

Optionally, the correspondence 3 may be understood as <a TWT flow identifier, MAC address information of a fifth station setting up the TWT agreement, and MAC address information of a sixth station setting up the TWT agreement>. The fifth station and the sixth station are stations on a second link, and the second link is any link in one or more links for which a TWT agreement is set up between the first multi-link device and the second multi-link device. Optionally, the correspondence 3 may be further understood as <a TWT flow identifier, MAC address information of a station requesting to set up a TWT agreement, and MAC address information of a station responding to a setup request>. In this case, the station requesting to set up the TWT agreement is no longer the station transmitting the third frame (a TWT setup request frame, which may also be referred to as a TWT setup frame, a TWT request frame, or a TWT agreement request), but the station 1 setting up the TWT agreement. The station 1 and the TWT requesting station are affiliated with a same multi-link device, and operate on a link indicated by a link identifier information field. The station responding to setup of the TWT agreement is no longer a station transmitting a fourth frame (a TWT setup response frame or a response to a TWT agreement request), but the station 2 setting up the TWT agreement. The station 2 and the TWT responding station are affiliated with a same multi-link device, and operate on the link indicated by the link identifier information field. The station 1 may be the same as or different from the TWT requesting station. The station 2 may be the same as or different from the TWT responding station.

Because the foregoing correspondence exists, after receiving the first frame, the first station may identify, based on the link identifier of the first link and the foregoing correspondence, the TWT agreement requested to be torn down for the first link. A TWT flow identifier in each TWT agreement needs to be unique in a plurality of TWT agreements that are set up between a station requesting to set up a TWT agreement and a station responding to a setup request, and that are set up based on a link identifier, to ensure that a teardown frame can tear down a specified TWT agreement. Alternatively, a TWT flow identifier in each TWT agreement needs to be unique in a plurality of TWT agreements that are set up between an MLD requesting to set up a TWT agreement and an MLD responding to a setup request, and that are set up based on a link identifier, to ensure that a teardown frame can tear down a specified TWT agreement. Therefore, the first station may identify, based on the TWT flow identifier and the link identifier of the first link, the link for which the TWT agreement is requested to be torn down.

Therefore, in the correspondence (1), a TWT teardown rule is as follows: When the TWT teardown frame is successfully transmitted or received, a TWT agreement corresponding to the TWT flow identifier, the MAC address information of the station requesting to set up the TWT agreement, the MAC address information of the station responding the setup request, and the link identifier in the TWT teardown frame can be torn down (When a TWT Teardown frame is successfully transmitted or received, the TWT agreement corresponding to the TWT Flow Identifier field, the TWT requesting STA MAC address, the TWT responding STA MAC address, and link ID of the TWT Teardown frame shall be deleted).

In the correspondence (2), a TWT teardown rule is as follows: When the TWT teardown frame is successfully transmitted or received, a TWT agreement corresponding to the TWT flow identifier, the MAC address information of the MLD requesting to set up the TWT agreement, the MAC address information of the MLD responding the setup request, and the link identifier in the TWT teardown frame can be torn down (When a TWT Teardown frame is successfully transmitted or received, the TWT agreement corresponding to the TWT Flow Identifier field, the TWT requesting MLD MAC address, the TWT responding MLD MAC address, and link ID of the TWT Teardown frame shall be deleted).

In the correspondence (3), a TWT teardown rule is as follows: When the TWT teardown frame is successfully transmitted or received, a TWT agreement corresponding to the TWT flow identifier, the MAC address information of the station 1 setting up the TWT agreement, and the MAC address information of the station 2 setting up the TWT agreement can be torn down (When a TWT Teardown frame is successfully transmitted or received, the TWT agreement corresponding to the TWT Flow Identifier field, the TWT setup STA MAC address 1, and the TWT setup STA MAC address 2 shall be deleted).

In the foregoing correspondence (2), the MLD MAC address information is used to replace the STA MAC address information, to avoid that when the MAC address information of the station requesting to set up the TWT agreement is meaningless after the station requesting to set up the TWT agreement is dissociated, a TWT agreement cannot be identified according to the foregoing correspondence (1).

S 1102: The first station transmits a second frame to the second station in response to the first frame. Correspondingly, the second station receives the second frame.

In other words, the second frame is a response to the first frame, for example, an acknowledgment frame Ack.

S1 103: The first station tears down, based on the link identifier of the first link and the correspondence, the TWT agreement for the first link corresponding to the link identifier of the first link.

Optionally, a type, MLD TWT teardown, is added to a value (see the following Table 2) of the unprotected sub 1 GHz action field in the TWT teardown frame. For example, a value selected from reserved values (12 to 255) indicates MLD TWT teardown.

**Table 2**

| Value (value) | Meaning (meaning) | Time priority (time priority) |
|---|---|---|
| 0 | AID Switch Request | No |
| 1 | AID Switch Response | No |
| 2 | Sync Control | No |
| 3 | STA Information Announcement | No |
| 4 | EDCA Parameter Set | No |
| 5 | EL Operation | No |
| 6 | TWT Setup | No |
| 7 | TWT Teardown | No |
| 8 | Sectorized Group ID List | No |
| 9 | Sector ID Feedback | No |
| 10 | Reserved | |
| 11 | TWT information | No |
| 12-255 | Reserved | |

Optionally, the TWT teardown frame further includes a link identifier information field, for example, a link identifier field including one or more link identifiers or a link identifier bitmap. In an implementation, the link identifier information field may be an independent field, and is not located in the TWT flow field.

Optionally, in a special manner, if the link identifier information field does not appear, it indicates that the TWT teardown frame is used to tear down all TWT agreements corresponding to the TWT flow.

A process of tearing down a TWT agreement between MLDs may be independent of the foregoing process of setting up a TWT agreement between the MLDs. In other words, there is no binding relationship between the process of tearing down a TWT agreement and the foregoing process of setup between the MLDs. Regardless of which manner is used to set up an MLD, the method described in this application may be used in the TWT teardown process.

In a communication method provided in an embodiment of this application, a first frame carries an identifier of a first link, and a TWT agreement for a link may be uniquely determined based on the link identifier of the first link and a TWT flow identifier. Any station in a first multi-link device and a second multi-link device may request to tear down a TWT agreement for the first link, thereby improving flexibility of tearing down the TWT agreement.

An embodiment of this application further provides a communication method. Each TWT agreement corresponds to one TWT flow identifier, so that a TWT agreement for a link can be uniquely determined based on the TWT flow identifier, thereby improving accuracy of identifying the TWT agreement.

FIG. 13 is a schematic flowchart of still another communication method according to an embodiment of this application. The method includes the following steps.

S1301: An eighth station in a third multi-link device transmits a ninth frame, for example, a TWT setup frame, to a seventh station in a fourth multi-link device.

Correspondingly, the seventh station receives the ninth frame.

The seventh station may be an AP, and the eighth station is a non-AP STA. Alternatively, the seventh station may be a non-AP STA, and the eighth station is an AP. This embodiment is described by using an example in which the third multi-link device is a non-AP MLD, the fourth multi-link device is an AP MLD, the eighth station is a non-AP STA, and the seventh station is an AP. In this case, the eighth station is located in the third multi-link device, and the seventh station is located in the fourth multi-link device. Certainly, the third multi-link device may include more APs, and the fourth multi-link device may include more non-AP STAs.

The ninth frame is used to request to set up N TWT agreements on M links. M may be equal to N. To be specific, one TWT agreement is set up for each link. Alternatively, M may be less than N, for example, a plurality of TWT agreements are set up for a same link.

A process of setting up the TWT agreements in this embodiment is similar to that in the embodiment shown in FIG. 5. A difference lies in that in this embodiment, each TWT flow identifier corresponds to only one TWT agreement. In other words, one TWT element can be used to set up only one TWT agreement. The ninth frame includes N TWT elements. A format of the TWT element is the same as that described above. The N TWT elements may be partially different, or may be completely different. For example, target wake times are different.

Specifically, different from step S501 in the embodiment shown in FIG. 5, the eighth station transmits a management frame including the N TWT elements to the seventh station, indicating that the eighth station requests to set up TWT agreements corresponding to the N TWT elements. The ninth frame may further include a first field. The first field indicates whether a second field exists in the third frame. The second field indicates information about a link for which one or more TWT agreements requested to be set up. For specific formats of the first field and the second field, refer to the embodiment shown in FIG. 5.

S1302: The seventh station transmits a tenth frame to the eighth station in response to the ninth frame.

Correspondingly, the eighth station receives the tenth frame.

S1303: The seventh station transmits an eleventh frame to the eighth station.

Correspondingly, the eighth station receives the eleventh frame.

The eleventh frame indicates that the one or more TWT agreements requested to be set up are accepted.

Different from step S403 in the embodiment shown in FIG. 5, the seventh station transmits the management frame including the N TWT elements to the eighth station, indicating that the seventh station accepts setup of the TWT agreements corresponding to the N TWT elements.

S1304: The eighth station transmits a twelfth frame to the seventh station in response to the eleventh frame. In other words, the twelfth frame is a response to the eleventh frame.

Correspondingly, the seventh station receives the twelfth frame.

After the preceding steps are successfully completed, the TWT agreements are successfully set up in one or more links.

After the one or more TWT agreements are set up, the TWT flow identifiers are included in a first parameter set.

In addition, the first parameter set may further include at least one of the following information: a link identifier, MAC address information of a station requesting to set up the TWT agreement (namely, MAC address information of the eighth station), MAC address information of a station responding to a setup request (namely, MAC address information of the seventh station), MAC address information of an MLD requesting to set up the TWT agreement (namely, MAC address information of the third multi-link device), MAC address information of an MLD responding to a setup request (namely, MAC address information of the fourth multi-link device), MAC address information of a station initiating TWT agreement teardown, MAC address information of a station responding to the TWT agreement teardown, and MAC address information of stations on two sides that set up the TWT agreement. The stations on the two sides that set up the TWT agreement are stations at two ends of any link on which one or more set-up TWT agreements are located. In other words, the MAC address information of stations on two sides that set up the TWT agreement is MAC address information of a station 1 setting up the TWT agreement, and MAC address information of a station 2 setting up the TWT agreement. For example, if a TWT agreement is set up on a link 1 by using a ninth frame and a tenth frame (where the link 1 is indicated by a link identifier information field), a station corresponding to the MAC address information of the station 1 setting up the TWT agreement is a station that operates on the link 1 and that is affiliated with an MLD with which a TWT requesting station (the eighth station in the third multi-link device) is affiliated. A station corresponding to the MAC address information of the station 2 setting up the TWT agreement is a station that operates on the link 1 and that is affiliated with an MLD with which a TWT responding station (the seventh station in the fourth multi-link device) is affiliated. The TWT requesting station and the TWT responding station operate on a same link. Otherwise, they cannot directly receive information transmitted by each other. Optionally, the link 1 is not the link on which the eighth station and the seventh station operate. Optionally, the link 1 is the link on which the eighth station and the seventh station operate.

In this case, the first parameter set may be one of the following:
(1) <a TWT flow identifier, MAC address information of a station requesting to set up a TWT agreement, MAC address information of a station responding to a setup request, and a link identifier>;
(2) <a TWT flow identifier, MAC address information of an MLD requesting to set up a TWT agreement, and MAC address information of an MLD responding to a setup request, and a link identifier>;
(3) <a TWT flow identifier, MAC address information of an MLD requesting to set up a TWT agreement, and MAC address information of an MLD responding to a setup request>;
(4) <a TWT flow identifier, MAC address information (MAC address of TWT teardown initiating STA) of a station initiating TWT agreement teardown, and MAC address information (MAC address of TWT teardown responding STA) of a station responding to the TWT agreement teardown>; and
(5) <a TWT flow identifier, MAC address information of a station 1 setting up a TWT agreement, and MAC address information of a station 2 setting up the TWT agreement>.

Optionally, the correspondence 5 may be understood as <a TWT flow identifier, MAC address information of a fifth station setting up the TWT agreement, and MAC address information of a sixth station setting up the TWT agreement>. The fifth station and the sixth station are stations on a second link, and the second link is any link in one or more links for which a TWT agreement is set up between the first multi-link device and the second multi-link device. Optionally, the correspondence 5 may be further understood as <a TWT flow identifier, MAC address information of a station requesting to set up a TWT agreement, and MAC address information of a station responding to a setup request>. In this case, the station requesting to set up the TWT agreement is no longer the station transmitting the ninth frame (a TWT setup request, which may also be referred to as a TWT setup frame, a TWT request frame, or a TWT agreement request), but the station 1 setting up the TWT agreement. The station 1 and the TWT requesting station are affiliated with a same multi-link device, and operate on a link indicated by a link identifier information field. The station responding to setup of the TWT agreement is no longer a station transmitting a tenth frame (a TWT setup response frame or a response to a TWT agreement request), but the station 2 setting up the TWT agreement. The station 2 and the TWT responding station are affiliated with a same multi-link device, and operate on the link indicated by the link identifier information field. The station 1 may be the same as or different from the TWT requesting station. The station 2 may be the same as or different from the TWT responding station.

A principle is required for (3) and (4): A TWT flow identifier of each TWT agreement is unique in the TWT requesting MLD and the TWT responding MLD. This principle is also applicable to (1) and (2). In addition, an alternative principle applicable to (1) and (2) is as follows: A TWT flow identifier needs to be unique in a plurality of TWT agreements that are set up between a station requesting to set up a TWT agreement and a station responding to a setup request, and that are set up based on a link identifier, to ensure that a teardown frame can tear down a specified TWT agreement. Alternatively, a TWT flow identifier in each TWT agreement needs to be unique in a plurality of TWT agreements that are set up between an MLD requesting to set up a TWT agreement and an MLD responding to a setup request, and that are set up based on a link identifier, to ensure that a teardown frame can tear down a specified TWT agreement.

According to a communication method provided in an embodiment of this application, a TWT agreement for a link can be uniquely determined based on the TWT flow identifier, thereby improving accuracy of identifying the TWT agreement.

After TWT agreements on one or more links are set up, if a TWT agreement for a link needs to be torn down, the TWT agreement for the link can be requested to be torn down. An embodiment of this application further provides a communication method. A frame for requesting to tear down a TWT agreement for a first link carries a TWT flow identifier, and a TWT agreement for one link may be uniquely determined based on the TWT flow identifier. Any station in a third multi-link device and a fourth multi-link device may request to tear down the TWT agreement for the first link, thereby improving flexibility of tearing down the TWT agreement.

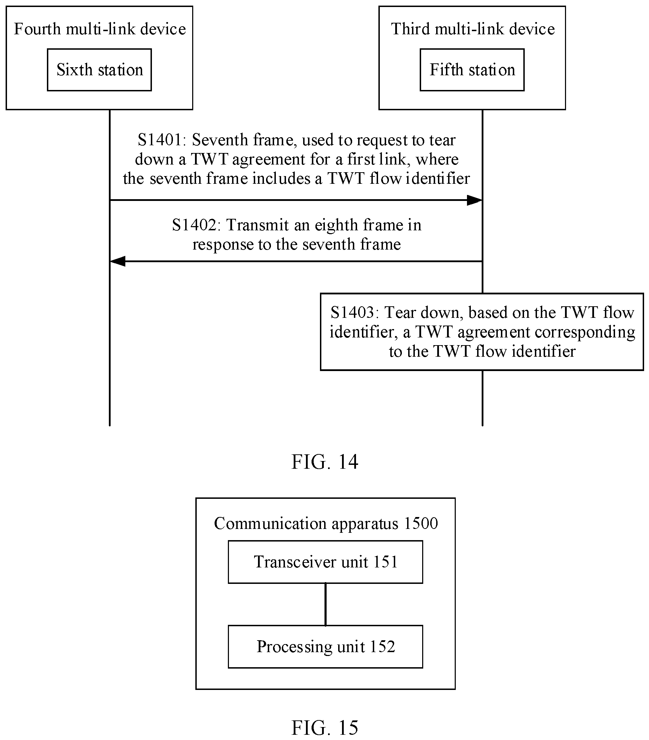

FIG. 14 is a schematic flowchart of yet another communication method according to an embodiment of this application. The method includes the following steps.

S1401: A sixth station in the fourth multi-link device transmits a seventh frame to a fifth station in the third multi-link device.

Correspondingly, the fifth station receives the seventh frame.

In the foregoing embodiment, a TWT agreement has been set up for the first link or more links between the third multi-link device and the fourth multi-link device. In this embodiment, the TWT agreement for the first link needs to be torn down. The sixth station transmits the seventh frame to the fifth station. The seventh frame is used to request to tear down the TWT agreement for the first link. The first link is any link in one or more links for which a TWT agreement is set up between the third multi-link device and the fourth multi-link device.

Alternatively, the fifth station may be an AP or a non-AP STA, and the sixth station may be a non-AP STA or an AP. The fifth station may be a same station as the eighth station requesting to set up the TWT agreement in the foregoing embodiment, may be a different station from the eighth station, may be a same station as the seventh station in the foregoing embodiment, or may be a different station from the seventh station. The sixth station may be a same station as the eighth station requesting to set up the TWT agreement in the foregoing embodiment, may be different from the eighth station, may be a same station as the seventh station in the foregoing embodiment, or may be different from the seventh station.

Still refer to FIG. 6. It is assumed that the third multi-link device is a non-AP MLD, and the fourth multi-link device is an AP MLD. TWT agreements on the link 1 to the link 3 have been set up for the link 1, and a TWT agreement for the link 3 needs to be torn down. The fifth station may be any station in the non-AP STA 1 to a non-AP STA 3. It is assumed that the fifth station herein is the non-AP STA 2. The sixth station may be any station in an AP 1 to an AP 3. It is assumed that the sixth station herein is the AP 2.

In this embodiment, the seventh frame includes a TWT flow identifier of the TWT agreement. Each TWT agreement corresponds to a TWT flow identifier.

After the TWT agreement is set up, a TWT agreement for a link may be identified based on the TWT flow identifier. The TWT flow identifier is included in a first parameter set.

In addition, the first parameter set may further include at least one of the following information: a link identifier, MAC address information of a station requesting to set up the TWT agreement (namely, MAC address information of the eighth station), MAC address information of a station responding to a setup request (namely, MAC address information of the seventh station), MAC address information of an MLD requesting to set up the TWT agreement (namely, MAC address information of the third multi-link device), MAC address information of an MLD responding to a setup request (namely, MAC address information of the fourth multi-link device), MAC address information of a station initiating TWT agreement teardown (namely, MAC address information of the sixth station), MAC address information of a station responding to the TWT agreement teardown (namely, MAC address information of the fifth station), MAC address information of a station 1 setting up the TWT agreement, and MAC address information of a station 2 setting up the TWT agreement. In this case, the first parameter set may be one of the following:
(1) <a TWT flow identifier, MAC address information of a station requesting to set up a TWT agreement, MAC address information of a station responding to a setup request, and a link identifier>;
(2) <a TWT flow identifier, MAC address information of an MLD requesting to set up a TWT agreement, MAC address information of an MLD responding to a setup request, and a link identifier>;
(3) <a TWT flow identifier, MAC address information of an MLD requesting to set up a TWT agreement, and MAC address information of an MLD responding to a setup request>;
(4) <a TWT flow identifier, MAC address information of a station initiating TWT agreement teardown, and MAC address information of a station responding to the TWT agreement teardown>; and
(5) <a TWT flow identifier, MAC address information of a station 1 setting up a TWT agreement, and MAC address information of a station 2 setting up the TWT agreement>.

Optionally, the correspondence 5 may be understood as <a TWT flow identifier, MAC address information of the fifth station setting up the TWT agreement, and MAC address information of the sixth station setting up the TWT agreement>. The fifth station and the sixth station are stations on a second link, and the second link is any link in one or more links for which a TWT agreement is set up between the first multi-link device and the second multi-link device. Optionally, the correspondence 5 may be further understood as <a TWT flow identifier, MAC address information of a station requesting to set up a TWT agreement, and MAC address information of a station responding to a setup request>. In this case, the station requesting to set up the TWT agreement is no longer the station transmitting a ninth frame (a TWT setup request, which may also be referred to as a TWT setup frame, a TWT request frame, or a TWT agreement request), but the station 1 setting up the TWT agreement. The station 1 and the TWT requesting station are affiliated with a same multi-link device, and operate on a link indicated by a link identifier information field. The station responding to setup of the TWT agreement is no longer a station transmitting a tenth frame (a TWT setup response frame or a response to a TWT agreement request), but the station 2 setting up the TWT agreement. The station 2 and the TWT responding station are affiliated with a same multi-link device, and operate on the link indicated by the link identifier information field. The station 1 may be the same as or different from the TWT requesting station. The station 2 may be the same as or different from the TWT responding station.

Because the foregoing correspondence exists, after receiving the seventh frame, the fifth station may identify, based on the TWT flow identifier and other information in the first parameter set, the TWT agreement requested to be torn down for the first link. A TWT flow identifier in each TWT agreement needs to be unique in a plurality of TWT agreements that are set up between a station requesting to set up a TWT agreement and a station responding to a setup request, and that are set up based on a link identifier, to ensure that a teardown frame can tear down a specified TWT agreement. Alternatively, a TWT flow identifier in each TWT agreement needs to be unique in a plurality of TWT agreements that are set up between an MLD requesting to set up the TWT agreement and an MLD responding to the setup request, and that are set up based on a link identifier, to ensure that a teardown frame can tear down a specified TWT agreement. Alternatively, a TWT flow identifier in each TWT agreement needs to be unique in a plurality of TWT agreements set up between a station initiating TWT agreement teardown and a station responding to the TWT agreement teardown, to ensure that a teardown frame can tear down a specified TWT agreement. Therefore, the fifth station may identify, based on the TWT flow identifier (and the link identifier of the first link), the link for which the TWT agreement is requested to be torn down. Therefore, in the first parameter set (1), a TWT teardown rule is as follows: When the TWT teardown frame is successfully transmitted or received, a TWT agreement corresponding to the TWT flow identifier, the MAC address information of the station requesting to set up the TWT agreement, the MAC address information of the station responding the setup request, and the link identifier in the TWT teardown frame can be torn down (When a TWT Teardown frame is successfully transmitted or received, the TWT agreement corresponding to the TWT Flow Identifier field, the TWT requesting STA MAC address and the TWT responding STA MAC address, link ID of the TWT Teardown frame shall be deleted).

In the first parameter set (2), a TWT teardown rule is as follows: When the TWT teardown frame is successfully transmitted or received, a TWT agreement corresponding to the TWT flow identifier, the MAC address information of the MLD requesting to set up the TWT agreement, the MAC address information of the MLD responding the setup request, and the link identifier in the TWT teardown frame can be torn down (When a TWT Teardown frame is successfully transmitted or received, the TWT agreement corresponding to the TWT Flow Identifier field, the TWT requesting MLD MAC address and the TWT responding MLD MAC address, link ID of the TWT Teardown frame shall be deleted).

In the first parameter set (3), a TWT teardown rule is as follows: When the TWT teardown frame is successfully transmitted or received, a TWT agreement corresponding to the TWT flow identifier, the MAC address information of the MLD requesting to set up the TWT agreement, the MAC address information of the MLD responding the setup request, and the link identifier in the TWT teardown frame can be torn down (When a TWT Teardown frame is successfully transmitted or received, the TWT agreement corresponding to the TWT Flow Identifier field, the TWT requesting MLD MAC address and the TWT responding MLD MAC address shall be deleted).

In the first parameter set (4), a TWT teardown rule is as follows: When the TWT teardown frame is successfully transmitted or received, a TWT agreement corresponding to the TWT flow identifier, the MAC address information of the station initiating TWT agreement teardown, and the MAC address information of the station responding the TWT agreement teardown can be torn down (When a TWT Teardown frame is successfully transmitted or received, the TWT agreement corresponding to the TWT Flow Identifier field, the TWT teardown initiating STA MAC address and the TWT teardown responding STA MAC address shall be deleted).

In the first parameter set (5), a TWT teardown rule is as follows: When the TWT teardown frame is successfully transmitted or received, a TWT agreement corresponding to the TWT flow identifier, the MAC address information of the station 1 setting up the TWT agreement, and the MAC address information of the station 2 setting up the TWT agreement can be torn down (When a TWT Teardown frame is successfully transmitted or received, the TWT agreement corresponding to the TWT Flow Identifier field, the TWT setup STA MAC address 1, and the TWT setup STA MAC address 2 shall be deleted).

In the foregoing first parameter set (2) or (3), the MLD MAC address information is used to replace the STA MAC address information, to avoid that when the MAC address information of the station requesting to set up the TWT agreement is meaningless after the station requesting to set up the TWT agreement is dissociated, a TWT agreement cannot be identified according to the foregoing first parameter set (1).

S1402: The fifth station transmits an eighth frame to the sixth station in response to the seventh frame.

Correspondingly, the sixth station receives the eighth frame.

In other words, the eighth frame is a response to the seventh frame, indicating that the seventh frame is successfully received.

The following steps may be further included.

S1403: The fifth station tears down, based on the TWT flow identifier, a TWT agreement corresponding to the TWT flow identifier.

Optionally, a type, MLD TWT teardown, is added to a value (shown in the foregoing Table 2) of the unprotected sub 1 GHz action field in the TWT teardown frame. For example, a value selected from reserved values indicates MLD TWT teardown.

Optionally, the TWT teardown frame further includes a link identifier information field, for example, a link identifier field including one or more link identifiers or a link identifier bitmap. In an implementation, the link identifier information field may be an independent field, and is not located in the TWT flow field.

A process of tearing down a TWT agreement between MLDs may be independent of the foregoing process of setting up a TWT agreement between the MLDs. In other words, there is no binding relationship between the process of tearing down a TWT agreement and the foregoing process of setup between the MLDs. Regardless of which manner is used to set up an MLD, the method described in this application may be used in the TWT teardown process. According to a communication method provided in an embodiment of this application, a frame for requesting to tear down a TWT agreement for a first link carries a TWT flow identifier, and a TWT agreement for one link may be uniquely determined based on the TWT flow identifier. Any station in a third multi-link device and a fourth multi-link device may request to tear down the TWT agreement for the first link, thereby improving flexibility of tearing down the TWT agreement.

The foregoing describes the method provided in embodiments of this application. The following provides a communication apparatus for performing the foregoing method. It may be understood that, to perform the method, the communication apparatus includes a corresponding hardware structure and/or software module for performing the method. A person skilled in the art may be aware that this application can be implemented in a form of hardware, software, or a combination of hardware and software.

The communication apparatus provided in embodiments of this application may be divided into functional modules based on the foregoing method. For example, the communication apparatus may correspond to a functional module of each step in the method, or two or more steps may be integrated into one functional module. The foregoing functional modules may be implemented by using hardware, or may be implemented by using software, or may be implemented by using software in combination with hardware. It should be noted that, in embodiments of this application, division into the functional modules is an example, and is merely logical function division. During actual implementation, another division manner may be used. The following uses an example in which each step corresponds to one functional module for description.

FIG. 15 is a possible schematic diagram of a structure of a communication apparatus. The communication apparatus 1500 includes a transceiver unit 151 and a processing unit 152.

In an embodiment, the communication apparatus may be the first station in the first multi-link device in the foregoing embodiments. The transceiver unit 151 is configured to receive a first frame from a second station in a second multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device. The transceiver unit 151 is further configured to transmit a second frame to the second station in response to the first frame.

Further, the processing unit 152 is configured to: tear down, based on the link identifier of the first link and a correspondence, the TWT agreement for the first link corresponding to the link identifier of the first link.

In another embodiment, the communication apparatus may be the second station in the second multi-link device in the foregoing embodiments. The transceiver unit 151 is configured to transmit a first frame to a first station in a first multi-link device, where the first frame is used to request to tear down a target wake time agreement TWT agreement for a first link, the first frame includes a link identifier of the first link, and the first link is any link in one or more links for which a TWT agreement is set up between the first multi-link device and the second multi-link device. The transceiver unit 151 is further configured to receive a second frame from the first station, where the second frame is a response to the first frame.

In still another embodiment, the communication apparatus may be the third station in the second multi-link device in the foregoing embodiments. The transceiver unit 151 is configured to receive a third frame from a fourth station, where the third frame is used to request to set up one or more target wake time agreements TWT agreements, each TWT agreement corresponds to one link between a first multi-link device and the second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier. The transceiver unit 151 is further configured to transmit a fourth frame to the fourth station in response to the third frame. The transceiver unit 151 is further configured to transmit a fifth frame to the fourth station, where the fifth frame is used to acknowledge that the one or more TWT agreements requested to be set up are accepted. The transceiver unit 151 is further configured to receive a sixth frame from the fourth station, where the sixth frame is a response to the fifth frame.

In yet another embodiment, the communication apparatus may be the fourth station in the first multi-link device in the foregoing embodiments. The transceiver unit 151 is configured to transmit a third frame to a third station, where the third frame is used to request to set up one or more target wake time agreements TWT agreements, each TWT agreement corresponds to one link between the first multi-link device and a second multi-link device, the third frame includes a first field, the first field indicates whether a second field exists in the third frame, the second field indicates information about a link for which the one or more TWT agreements are requested to be set up, and the one or more TWT agreements correspond to one TWT flow identifier. The transceiver unit 151 is further configured to receive a fourth frame from the third station, where the fourth frame is a response to the third frame. The transceiver unit 151 is further configured to receive a fifth frame from the third station, where the fifth frame is used to acknowledge that the one or more TWT agreements requested to be set up are accepted. The transceiver unit 151 is further configured to transmit a sixth frame to the third station in response to the fifth frame.

In still yet another embodiment, the communication apparatus may be a first station in a first multi-link device. The transceiver unit 151 is configured to receive a first frame from a second station in a second multi-link device, where the first frame is used to request to tear down a target wake time agreement TWT agreement for a first link, the first frame includes a flow identifier of the TWT agreement, and the TWT agreement corresponds to the TWT flow identifier. The transceiver unit 151 is further configured to transmit a second frame to the second station in response to the first frame.

Further, the processing unit 152 is configured to tear down, based on the TWT flow identifier, the TWT agreement corresponding to the TWT flow identifier.

In a further embodiment, the communication apparatus may be a second station in a second multi-link device. The transceiver unit 151 is configured to transmit a first frame to a first station in a first multi-link device, where the first frame is used to request to tear down a target wake time agreement TWT agreement for a first link, the first frame includes a flow identifier of the TWT agreement, and the TWT agreement corresponds to the TWT flow identifier. The transceiver unit 151 is further configured to receive a second frame from the first station, where the second frame is a response to the first frame.

In a still further embodiment, the communication apparatus may be a third station in a second multi-link device. The transceiver unit 151 is configured to receive a third frame from a fourth station, where the third frame is used to request to set up one or more target wake time agreements TWT agreements on one or more links, and each TWT agreement corresponds to one TWT flow identifier. The transceiver unit 151 is further configured to transmit a fourth frame to the fourth station in response to the third frame. The transceiver unit 151 is further configured to transmit a fifth frame to the fourth station, where the fifth frame is used to acknowledge that the one or more TWT agreements requested to be set up are accepted. The transceiver unit 151 is further configured to receive a sixth frame from the fourth station, where the sixth frame is a response to the fifth frame.

In a yet further embodiment, the communication apparatus may be a fourth station in a first multi-link device. The transceiver unit 151 is configured to transmit a third frame to a third station, where the third frame is used to request to set up one or more target wake time agreements TWT agreements on one or more links, and each TWT agreement corresponds to one TWT flow identifier. The transceiver unit 151 is further configured to receive a fourth frame from the third station, where the fourth frame is a response to the third frame. The transceiver unit 151 is further configured to receive a fifth frame from the third station, where the fifth frame is used to acknowledge that the one or more TWT agreements requested to be set up are accepted. The transceiver unit 151 is further configured to transmit a sixth frame to the fourth station in response to the fifth frame.

In a still yet further embodiment, the communication apparatus may be a first station in a first multi-link device. The transceiver unit 151 is configured to receive a first frame from a second station in a second multi-link device, where the first frame is used to request to tear down a target wake time agreement TWT agreement for a first link, and the first link is any link in one or more links for which a TWT agreement is set up between the first multi-link device and the second multi-link device. The transceiver unit 151 is further configured to transmit a second frame to the second station in response to the first frame.

Further, the processing unit 152 is configured to: tear down, based on a first correspondence, the TWT agreement corresponding to link identifier information of the first link.

Further, the processing unit 152 is configured to: tear down, based on a second correspondence, the TWT agreement corresponding to MAC address information of the multi-link device.

In even yet another embodiment, the communication apparatus may be the second station in the second multi-link device in the foregoing embodiments. The transceiver unit 151 is configured to transmit a first frame to a first station in a first multi-link device, where the first frame is used to request to tear down a target wake time agreement TWT agreement for a first link, and the first link is any link in one or more links for which a TWT agreement is set up between the first multi-link device and the second multi-link device. The transceiver unit 151 is further configured to receive a second frame from the first station, where the second frame is a response to the first frame.

In another embodiment, the communication apparatus may be a third station in a second multi-link device. The transceiver unit 151 is configured to receive a third frame from a fourth station, where the third frame is used to request to set up one or more target wake time agreements TWT agreements, each TWT agreement corresponds to one link between a first multi-link device and the second multi-link device, the third frame includes a first field, the first field indicates whether a second field exists in the third frame, and the second field indicates link identifier information of a link for which the one or more TWT agreements are requested to be set up. The transceiver unit 151 is further configured to transmit a fourth frame to the fourth station in response to the third frame. The transceiver unit 151 is further configured to transmit a fifth frame to the fourth station, where the fifth frame is used to acknowledge that the one or more TWT agreements requested to be set up are accepted. The transceiver unit 151 is further configured to receive a sixth frame from the fourth station, where the sixth frame is a response to the fifth frame.

In another embodiment, the communication apparatus may be a fourth station in a first multi-link device. The transceiver unit 151 is configured to transmit a third frame to a third station, where the third frame is used to request to set up one or more target wake time agreements TWT agreements, each TWT agreement corresponds to one link between the first multi-link device and a second multi-link device, the third frame includes a first field, the first field indicates whether a second field exists in the third frame, the second field indicates link identifier information of a link for which the one or more TWT agreements are requested to be set up, and the one or more TWT agreements correspond to one TWT flow identifier. The transceiver unit 151 is further configured to receive a fourth frame from the third station, where the fourth frame is a response to the third frame. The transceiver unit 151 is further configured to receive a fifth frame from the third station, where the fifth frame is used to acknowledge that the one or more TWT agreements requested to be set up are accepted. The transceiver unit 151 is further configured to transmit a sixth frame to the third station in response to the fifth frame.

For functions that can be implemented by the communication apparatus 1500, refer to any one of specific implementations in the method embodiments in this application. This is not limited in this application, and details are not described herein again.

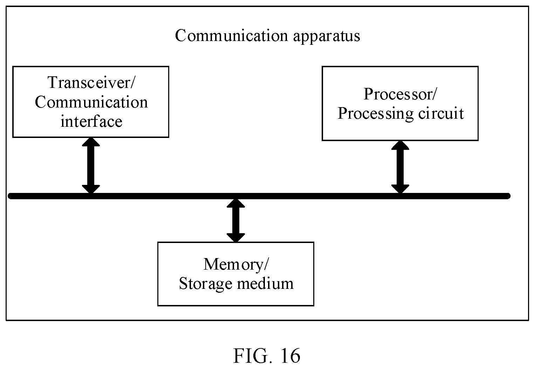

FIG. 16 is a diagram of a structure of a possible product form of a communication apparatus according to an embodiment of this application. FIG. 16 is a specific form of the communication apparatus shown in FIG. 15.

In a possible product form, the communication apparatus may be an information transmission device/an information transmission board. The communication apparatus includes a processor and a transceiver. Optionally, the communication apparatus may further include a memory. The processor is configured to perform the method steps performed by the processing unit 152 in FIG. 15. The transceiver is configured to perform the method steps performed by the transceiver unit 151 in FIG. 15.

In another possible product form, the communication apparatus may be a chip. The communication apparatus includes a processing circuit and a communication interface. Optionally, the communication apparatus may further include a storage medium. The processing circuit is configured to perform the method steps performed by the processing unit 152 in FIG. 15. The communication interface is configured to perform the method steps performed by the transceiver unit 151 in FIG. 15.

In another possible product form of the foregoing embodiment, the communication apparatus may alternatively be implemented by using the following: one or more field programmable gate arrays (field programmable gate array, FPGA), a programmable logic device (programmable logic device, PLD), a controller, a state machine, a logic gate, a discrete hardware component, any other proper circuit, or any combination of circuits that can perform various functions described in this application.

The processor may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 14 or FIG. 15, but this does not mean that there is only one bus or only one type of bus.

A person of ordinary skill in the art may understand that all or some of the steps of the method embodiments may be implemented by hardware relevant to program instructions. The program instructions may be stored in a computer-readable storage medium. When the program instructions are run, the steps of the method embodiments are performed. The foregoing storage medium includes any medium that can store program code, such as a USB flash drive, a removable hard disk, a ROM, a RAM, a magnetic disk, or an optical disc.

On the one hand, an embodiment of this application further provides a readable storage medium. The readable storage medium stores computer-executable instructions. When the computer-executable instructions are run, a device (which may be a single-chip microcomputer, a chip, a controller, or the like) or a processor is enabled to perform the steps in the service indication method provided in this application.

On the other hand, an embodiment of this application further provides a computer program product. The computer program product includes computer-executable instructions. The computer-executable instructions are stored in a computer-readable storage medium. At least one processor of a device may read the computer-executable instructions from the computer-readable storage medium. The at least one processor executes the computer-executable instructions, so that the device performs the steps in the service indication method provided in this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid state disk (solid state disk, SSD).

## Claims

1. A communication method, applied to a first station in a first multi-link device, wherein the method comprises:
receiving a first frame from a second station in a second multi-link device, wherein the first frame is used to request to tear down a target wake time agreement TWT agreement for a first link, and the first link is any link in one or more links for which a TWT agreement is set up between the first multi-link device and the second multi-link device; and
transmitting a second frame to the second station in response to the first frame.

2. A communication method, applied to a second station in a second multi-link device, wherein the method comprises:
transmitting a first frame to a first station in a first multi-link device, wherein the first frame is used to request to tear down a target wake time agreement TWT agreement for a first link, and the first link is any link in one or more links for which a TWT agreement is set up between the first multi-link device and the second multi-link device; and
receiving a second frame from the first station, wherein the second frame is a response to the first frame.

3. The method according to claim 1 or 2, wherein the first frame comprises link identifier information of the first link, and the link identifier information comprises a link identifier or a link bitmap.

4. The method according to claim 3, wherein a first correspondence exists between the TWT agreement for the first link and the link identifier information of the first link.

5. The method according to claim 4, wherein the first correspondence comprises the following combination information:
a TWT flow identifier of the TWT agreement, media access control MAC address information of a third station requesting to set up the TWT agreement, MAC address information of a fourth station responding to a setup request, and the link identifier of the first link;
a TWT flow identifier of the TWT agreement, MAC address information of the first multi-link device, MAC address information of the second multi-link device, and the link identifier of the first link; or
a TWT flow identifier of the TWT agreement, MAC address information of a fifth station setting up the TWT agreement, and MAC address information of a sixth station setting up the TWT agreement, wherein the fifth station and the sixth station are stations on a second link, and the second link is any link in one or more links for which a TWT agreement is set up between the first multi-link device and the second multi-link device; and
the TWT flow identifier identifies one or more TWT agreements set up between the first multi-link device and the second multi-link device.

6. The method according to any one of claims 3 to 5, wherein the first frame comprises a TWT flow field, and the link identifier information is carried in the TWT flow field.

7. The method according to any one of claims 4 to 6, wherein the method further comprises:
tearing down the TWT agreement based on the first correspondence.

8. The method according to claim 1 or 2, wherein a second correspondence exists between the TWT agreement for the first link and MAC address information of a multi-link device, and the multi-link device comprises the first multi-link device and/or the second multi-link device.

9. The method according to claim 8, wherein the second correspondence comprises the following combination information:
a TWT flow identifier of the TWT agreement, media access control MAC address information of the first multi-link device, and MAC address information of the second multi-link device;
a TWT flow identifier of the TWT agreement, MAC address information of the second station, and MAC address information of the first station; or
a TWT flow identifier of the TWT agreement, MAC address information of a fifth station setting up the TWT agreement, and MAC address information of a sixth station setting up the TWT agreement, wherein the fifth station and the sixth station are stations on a second link, and the second link is any link in one or more links for which a TWT agreement is set up between the first multi-link device and the second multi-link device; and
the TWT flow identifier identifies a TWT agreement set up between the first multi-link device and the second multi-link device.

10. The method according to claim 8 or 9, wherein the method further comprises:
tearing down the TWT agreement based on the second correspondence.

11. A first station, wherein a first multi-link device comprises the first station, and the first station comprises:
a transceiver unit, configured to receive a first frame from a second station in a second multi-link device, wherein the first frame is used to request to tear down a target wake time agreement TWT agreement for a first link, and the first link is any link in one or more links for which a TWT agreement is set up between the first multi-link device and the second multi-link device, and
the transceiver unit is further configured to transmit a second frame to the second station in response to the first frame.

12. A second station, wherein a second multi-link device comprises the second station, and the second station comprises:
a transceiver unit, configured to transmit a first frame to a first station in a first multi-link device, wherein the first frame is used to request to tear down a target wake time agreement TWT agreement for a first link, and the first link is any link in one or more links for which a TWT agreement is set up between the first multi-link device and the second multi-link device, and
the transceiver unit is further configured to receive a second frame from the first station, wherein the second frame is a response to the first frame.

13. The first station or the second station according to claim 11 or 12, wherein the first frame comprises link identifier information of the first link, and the link identifier information comprises a link identifier or a link bitmap.

14. The first station or the second station according to claim 13, wherein a first correspondence exists between the TWT agreement for the first link and the link identifier information of the first link.

15. The first station or the second station according to claim 14, wherein the first correspondence comprises the following combination information:
a TWT flow identifier of the TWT agreement, media access control MAC address information of a third station requesting to set up the TWT agreement, MAC address information of a fourth station responding to a setup request, and the link identifier of the first link;
a TWT flow identifier of the TWT agreement, MAC address information of the first multi-link device, MAC address information of the second multi-link device, and the link identifier of the first link; or
a TWT flow identifier of the TWT agreement, MAC address information of a fifth station setting up the TWT agreement, and MAC address information of a sixth station setting up the TWT agreement, wherein the fifth station and the sixth station are stations on a second link, and the second link is any link in one or more links for which a TWT agreement is set up between the first multi-link device and the second multi-link device; and
the TWT flow identifier identifies one or more TWT agreements set up between the first multi-link device and the second multi-link device.

16. The first station or the second station according to any one of claims 13 to 15, wherein the first frame comprises a TWT flow field, and the link identifier information is carried in the TWT flow field.

17. The first station or the second station according to any one of claims 14 to 16, further comprising:
tearing down the TWT agreement based on the first correspondence.

18. The first station or the second station according to claim 11 or 12, wherein a second correspondence exists between the TWT agreement for the first link and MAC address information of a multi-link device, and the multi-link device comprises the first multi-link device and/or the second multi-link device.

19. The first station or the second station according to claim 18, wherein the second correspondence comprises the following combination information:
a TWT flow identifier of the TWT agreement, media access control MAC address information of the first multi-link device, and MAC address information of the second multi-link device;
a TWT flow identifier of the TWT agreement, MAC address information of the second station, and MAC address information of the first station; or
a TWT flow identifier of the TWT agreement, MAC address information of a fifth station setting up the TWT agreement, and MAC address information of a sixth station setting up the TWT agreement, wherein the fifth station and the sixth station are stations on a second link, and the second link is any link in one or more links for which a TWT agreement is set up between the first multi-link device and the second multi-link device; and
the TWT flow identifier identifies a TWT agreement set up between the first multi-link device and the second multi-link device.

20. The first station or the second station according to claim 18 or 19, wherein the method further comprises:
tearing down the TWT agreement based on the second correspondence.

21. A communication method, applied to a third station, wherein the method comprises:
receiving a third frame from a fourth station, wherein the third frame is used to request to set up one or more target wake time agreements TWT agreements, each TWT agreement corresponds to one link between a first multi-link device and a second multi-link device, the third frame comprises a first field, the first field indicates whether a second field exists in the third frame, and the second field indicates link identifier information of a link for which the one or more TWT agreements are requested to be set up;
transmitting a fourth frame to the fourth station in response to the third frame;
transmitting a fifth frame to the fourth station, wherein the fifth frame is used to acknowledge that the one or more TWT agreements requested to be set up are accepted; and
receiving a sixth frame from the fourth station, wherein the sixth frame is a response to the fifth frame.

22. A communication method, applied to a fourth station, wherein the method comprises:
transmitting a third frame to a third station, wherein the third frame is used to request to set up one or more target wake time agreements TWT agreements, each TWT agreement corresponds to one link between a first multi-link device and a second multi-link device, the third frame comprises a first field, the first field indicates whether a second field exists in the third frame, and the second field indicates link identifier information of a link for which the one or more TWT agreements are requested to be set up;
receiving a fourth frame from the third station, wherein the fourth frame is a response to the third frame;
receiving a fifth frame from the third station, wherein the fifth frame is used to acknowledge that the one or more TWT agreements requested to be set up are accepted; and
transmitting a sixth frame to the third station in response to the fifth frame.

23. The method according to claim 21 or 22, wherein the first field is located in a control field in a TWT element, and when the first field indicates that the second field exists in the third frame, the third frame further comprises:
the second field is located in a TWT parameter information field of the TWT element.

24. The method according to any one of claims 21 to 23, wherein the second field is a bitmap, or the second field comprises a link identifier of the link for which the one or more TWT agreements are requested to be set up.

25. The method according to any one of claims 21 to 24, wherein a first correspondence exists between a TWT agreement for a first link and link identifier information of the first link, and the first link is any link in one or more links for which a TWT agreement is set up between the first multi-link device and the second multi-link device.

26. The method according to claim 25, wherein the first correspondence comprises the following combination information:
a TWT flow identifier of the TWT agreement, media access control MAC address information of the third station requesting to set up the TWT agreement, MAC address information of the fourth station responding to a setup request, and a link identifier of the first link; or
a TWT flow identifier of the TWT agreement, MAC address information of the first multi-link device, MAC address information of the second multi-link device, and a link identifier of the first link, wherein
the TWT flow identifier identifies one or more TWT agreements set up between the first multi-link device and the second multi-link device.

27. The method according to any one of claims 21 to 24, wherein a second correspondence exists between the TWT agreement for the first link and MAC address information of a multi-link device, the multi-link device comprises the first multi-link device and/or the second multi-link device, and the first link is any link in one or more links for which a TWT agreement is set up between the first multi-link device and the second multi-link device.

28. The method according to claim 27, wherein the second correspondence comprises the following combination information:
a TWT flow identifier of the TWT agreement, media access control MAC address information of the first multi-link device, and MAC address information of the second multi-link device; or
a TWT flow identifier of the TWT agreement, MAC address information of a second station, and MAC address information of a first station, wherein
the TWT flow identifier identifies a TWT agreement set up between the first multi-link device and the second multi-link device.

29. A third station, wherein the third station comprises:
a transceiver unit, configured to receive a third frame from a fourth station, wherein the third frame is used to request to set up one or more target wake time agreements TWT agreements, each TWT agreement corresponds to one link between a first multi-link device and a second multi-link device, the third frame comprises a first field, the first field indicates whether a second field exists in the third frame, and the second field indicates link identifier information of a link for which the one or more TWT agreements are requested to be set up;
the transceiver unit is further configured to transmit a fourth frame to the fourth station in response to the third frame;
the transceiver unit is further configured to transmit a fifth frame to the fourth station, wherein the fifth frame is used to acknowledge that the one or more TWT agreements requested to be set up are accepted; and
the transceiver unit is further configured to receive a sixth frame from the fourth station, wherein the sixth frame is a response to the fifth frame.

30. A fourth station, wherein the fourth station comprises:
a transceiver unit, configured to transmit a third frame to a third station, wherein the third frame is used to request to set up one or more target wake time agreements TWT agreements, each TWT agreement corresponds to one link between a first multi-link device and a second multi-link device, the third frame comprises a first field, the first field indicates whether a second field exists in the third frame, and the second field indicates link identifier information of a link for which the one or more TWT agreements are requested to be set up;
the transceiver unit is further configured to receive a fourth frame from the third station, wherein the fourth frame is a response to the third frame;
the transceiver unit is further configured to receive a fifth frame from the third station, wherein the fifth frame is used to acknowledge that the one or more TWT agreements requested to be set up are accepted; and
the transceiver unit is further configured to transmit a sixth frame to the third station in response to the fifth frame.

31. The third station or the fourth station according to claim 29 or 30, wherein the first field is located in a control field in a TWT element, and when the first field indicates that the second field exists in the third frame, the third frame further comprises:
the second field is located in a TWT parameter information field of the TWT element.

32. The third station or the fourth station according to any one of claims 29 to 31, wherein the second field is a bitmap, or the second field comprises a link identifier of the link for which the one or more TWT agreements are requested to be set up.

33. The third station or the fourth station according to any one of claims 29 to 32, wherein a first correspondence exists between a TWT agreement for a first link and link identifier information of the first link, and the first link is any link in one or more links for which a TWT agreement is set up between the first multi-link device and the second multi-link device.

34. The third station or the fourth station according to claim 33, wherein the first correspondence comprises the following combination information:
a TWT flow identifier of the TWT agreement, media access control MAC address information of the third station requesting to set up the TWT agreement, MAC address information of the fourth station responding to a setup request, and a link identifier of the first link; or
a TWT flow identifier of the TWT agreement, MAC address information of the first multi-link device, MAC address information of the second multi-link device, and a link identifier of the first link, wherein
the TWT flow identifier identifies one or more TWT agreements set up between the first multi-link device and the second multi-link device.

35. The third station or the fourth station according to any one of claims 29 to 32, wherein a second correspondence exists between the TWT agreement for the first link and MAC address information of a multi-link device, the multi-link device comprises the first multi-link device and/or the second multi-link device, and the first link is any link in one or more links for which a TWT agreement is set up between the first multi-link device and the second multi-link device.

36. The third station or the fourth station according to claim 35, wherein the second correspondence comprises the following combination information:
a TWT flow identifier of the TWT agreement, media access control MAC address information of the first multi-link device, and MAC address information of the second multi-link device; or
a TWT flow identifier of the TWT agreement, MAC address information of a second station, and MAC address information of a first station, wherein
the TWT flow identifier identifies a TWT agreement set up between the first multi-link device and the second multi-link device.

37. A communication apparatus, comprising a unit configured to perform the method according to any one of claims 1 and 3 to 10, comprising a unit configured to perform the method according to any one of claims 2 to 10, comprising a unit configured to perform the method according to any one of claims 21 and 23 to 28, or comprising a unit configured to perform the method according to any one of claims 22 to 28.

38. A communication apparatus, comprising a processor, wherein the processor is coupled to a memory, and is configured to: read instructions in the memory, and perform, based on the instructions, the method according to any one of claims 1 and 3 to 10, the method according to any one of claims 2 to 10, the method according to any one of claims 21 and 23 to 28, or the method according to any one of claims 22 to 28.

39. A computer-readable storage medium, configured to store a computer program, wherein the computer program comprises the method according to any one of claims 1 and 3 to 10, the method according to any one of claims 2 to 10, the method according to any one of claims 21 and 23 to 28, or the method according to any one of claims 22 to 28.

40. A computer program product, wherein when the computer program product runs on a computer, the method according to any one of claims 1 and 3 to 10, the method according to any one of claims 2 to 10, the method according to any one of claims 21 and 23 to 28, or the method according to any one of claims 22 to 28 is performed.
